# EUROPEAN PATENT APPLICATION

(11) **EP 3 451 268 A1**
(43) Date of publication of application: **06.03.2019**
(21) Application number: 18192261.8
(22) Date of filing: 03.09.2018
(51) Int. Cl.: G06Q 30/02

(54) **INFORMATION PROCESSING APPARATUS, INFORMATION PROCESSING SYSTEM, INFORMATION PROCESSING METHOD, AND RECORDING MEDIUM**

(30) Priority: 05.09.2017 JP 2017170580
(71) Applicant: TOYOTA JIDOSHA KABUSHIKI KAISHA, Toyota-shi, Aichi-ken, 471-8571 (JP); TOYOTA Connected Corporation, Aichi-ken 460-0003 (JP)
(72) Inventor: NOMURA, Masakazu, Aichi-ken, 460-0003 (JP); ENDO, Masato, Aichi-ken, 471-8571 (JP); YAMAMURO, Naoki, Aichi-ken, 471-8571 (JP)
(74) Representative: J A Kemp

(57) **Abstract**

An information processing apparatus includes a vehicle movement history information storage unit (522) that stores vehicle movement history information concerning a movement history including position information and clock time information of each of a plurality of vehicles (3), a terminal movement history information storage unit (523) that stores terminal movement history information concerning a movement history including position information and clock time information of each of a plurality of mobile terminals (4), and a vehicle specifying unit (525) that specifies one or more vehicles having a possibility of being boarded by a user of each mobile terminal, from among the vehicles, based on the vehicle movement history information and the terminal movement history information.

## Description

### BACKGROUND OF THE INVENTION

### 1. Field of the Invention

The invention relates to an information processing apparatus, information processing system, information processing method, and recording medium.

### 2. Description of Related Art

A technology for determining whether a user of a mobile terminal is on board a vehicle, based on communications between the mobile terminal and the vehicle, is known in the art (see, for example, Japanese Unexamined Patent Application Publication No. 2017-34572 (JP 2017-34572 A)).

According to the technology, a remote server, or the like, can collect position information from mobile terminals of a plurality of pre-registered users at the time when the users are on board vehicles. This makes it possible to grasp which user is on board a vehicle, which direction in which the user is heading, and so forth. Thus, for example, advertising information, recommendations, or the like, may be delivered to the mobile terminal of each user, in according with the preference or taste of the user, or a destination for which the vehicle is presumed to be heading, for example.

### SUMMARY OF THE INVENTION

However, in the system disclosed in JP 2017-34572, it is necessary to establish a condition in which the vehicle and the mobile terminal are communicably connected to each other. Therefore, in a situation where extra work, etc. are needed for establishing communicable connection between the vehicle and the mobile terminal of the user, through certain operation on the mobile terminal, it is difficult to force the user to do the extra work, and the system may not be able to determine with certainty that the user is on board the vehicle.

This invention provides an information processing apparatus, etc., which are able to grasp users who are on board vehicles, with improved reliability.

An information processing apparatus according to a first aspect of the invention includes a vehicle movement history information storage unit that stores vehicle movement history information concerning vehicle movement histories of a plurality of vehicles, and a terminal movement history information storage unit that stores terminal movement history information concerning terminal movement histories of a plurality of mobile terminals. Each of the vehicle movement histories includes position information and clock time information on each of the vehicles, and each of the terminal movement histories includes position information and clock time information on each of the mobile terminals. The information processing apparatus further includes a vehicle specifying unit that specifies one or more vehicles having a possibility of being boarded by a user of each of the mobile terminals, from among the vehicles, based on the vehicle movement history information stored in the vehicle movement history information storage unit, and the terminal movement history information stored in the terminal movement history information storage unit.

According to the above aspect, the information processing apparatus compares the vehicle movement history information with the terminal movement history information, for example, and can determine that a user of a mobile terminal was on board a vehicle, with respect to a part or the whole of the vehicle movement history of which the position information and clock time information are substantially identical with those of the terminal movement history information. Thus, the information processing apparatus can specify one or more vehicles having a possibility of being boarded by the user of the mobile terminal, from among the vehicles that were actually boarded by the user. Accordingly, the information processing apparatus can grasp the user of the mobile terminal who is on board the vehicle with higher certainty, by monitoring the position information of the mobile terminal, and the position information of the specified vehicle(s) having a possibility of being boarded by the user of the mobile terminal.

The information processing apparatus according to the above aspect of the invention may further include a vehicle picking unit that picks out one or more vehicles boarded by the user of each of the mobile terminals, from among the vehicles, based on the vehicle movement history information stored in the vehicle movement history information storage unit, and the terminal movement history information stored in the terminal movement history information storage unit. The vehicle specifying unit may specify the one or more vehicles having the possibility of being boarded by the user of each of the mobile terminals, from the one or more vehicles boarded by the user of each of the mobile terminals and picked out by the vehicle picking unit.

The information processing apparatus as described above specifically picks out one or more vehicles that were actually boarded by the user of each mobile terminal, so that it can specify the vehicle(s) having a possibility of being boarded by the user of each mobile terminal, from among the vehicles thus picked out.

In the information processing apparatus as described above, the vehicle picking unit may pick out a given vehicle as the one or more vehicles boarded by the user of one of the mobile terminals, when the terminal movement history information of the one mobile terminal indicates that, on a movement route from a departure point to a destination included in the vehicle movement history information of the given vehicle, the one mobile terminal stayed at around the departure point and the destination, in time slots in which the given vehicle was parked at the departure point and the destination, and indicates that the one mobile terminal was present at substantially the same position on the movement route at substantially the same time as the given vehicle.

The information processing apparatus as described above can specifically pick out the vehicle boarded by the user of the mobile terminal concerned, from among the vehicles.

In the information processing apparatus as described above, the vehicle specifying unit may specify one or more vehicles having a boarding frequency that is equal to or higher than a predetermined value, out of the one or more vehicles boarded by the user of each of the mobile terminals and picked out by the vehicle picking unit, as the one or more vehicles having the possibility of being boarded by the user of each of the mobile terminals.

The above information processing apparatus can specify the vehicle(s) having a relatively high boarding frequency, out of the picked vehicles that were actually boarded by the user of each mobile terminal, as the vehicle(s) having a possibility of being boarded by the user of the mobile terminal,. Accordingly, the information processing apparatus is less likely or unlikely to encounter a situation where a vehicle having a very low boarding frequency, e.g., a vehicle boarded by the user only once, is specified as the vehicle having a possibility of being boarded by the user of each mobile terminal, whereby the process for determining whether the user is on board the vehicle is wastefully carried out.

The information processing apparatus as described above may further include a vehicle storage unit that stores the one or more vehicles having the possibility of being boarded by the user of each of the mobile terminals and specified by the vehicle specifying unit, in association with the mobile terminal, or the user of the mobile terminal, and an on-board specifying unit that determines whether the user of the mobile terminal is on board one of the one or more vehicles stored in the vehicle storage unit in association with the mobile terminal or the user, based on current position information of the mobile terminal, and current position information of the one vehicle.

The above information processing apparatus can relatively easily determine whether the user of each mobile terminal is on board the vehicle, by monitoring the current position information of each mobile terminal, and the current position information of the vehicle stored in association with the user of the mobile terminal. Accordingly, the information processing apparatus can determine whether the user of each mobile terminal is on board the vehicle, in real time, for example.

The information processing apparatus as described above may further include a user connection determining unit that determines a degree of connection between the users of the mobile terminals, based on the one or more vehicles having the possibility of being boarded by the user of each of the mobile terminals and specified by the vehicle specifying unit.

When the same vehicle is specified as the vehicle having a possibility of being boarded by two or more users of the mobile terminals, for example, the information processing apparatus can determine that the two or more users have such a connection that they are on board together, or borrow the vehicle from each other. Accordingly, the information processing apparatus can deliver advertising information or recommendations taking account of the preference or taste common to the users, to the mobile terminal of each user, in a situation where the two or more users determined as having some degree of connection are located at the same position. Thus, the information processing apparatus can deliver advertising information, etc. taking account of the common preference, to a group of users who have some degree of connection and may act together, as a target, for improvement of the effect provided by delivery of the advertising information, etc.

In the information processing apparatus as described above, when the vehicle specifying unit specifies the same vehicle as one of the vehicles used by two or more users of the mobile terminals, the user connection determining unit may determine the degree of connection between the two or more users of the mobile terminals, according to a boarding frequency of each of the two or more users on the same vehicle.

When the same vehicle is specified as the vehicle having a possibility of being boarded by two users, for example, and there is a relatively small difference in the frequency of boarding on the same vehicle between the two users, the information processing apparatus can determine that the two users are often on board together, and thus have a strong connection. On the other hand, when there is a relatively large difference in the frequency of boarding on the same vehicle between the two users, the information processing apparatus can determine that the two users are not often on board together, and thus have a weak connection, for example. Accordingly, when the connection between the two or more users who are on board the vehicle is relatively strong, such as when the users are family members or close friends, the information processing apparatus can deliver advertising information or recommendations taking account of the preference or taste common to the users, to the mobile terminal of each user. Namely, the information processing apparatus can deliver advertising information or recommendations taking account of the common preference, to a group of users having a relatively strong connection and are expected to act together at a higher probability, as a target. Thus, the effect provided by delivery of the advertising information or recommendations can be further improved.

The information processing apparatus as described above may further include an advertisement viewing user specifying unit that specifies users of the mobile terminals who viewed an advertisement, from among the users of the mobile terminals, and a track record specifying unit that determines whether each of the users who viewed the advertisement and are specified by the advertisement viewing user specifying unit actually visited a physical shop at which goods or services as a subject of the advertisement are sold or provided, after viewing the advertisement, based on the terminal movement history information of the mobile terminal of the user, and the vehicle movement history information of the one or more vehicles having the possibility of being boarded by the user and specified by the vehicle specifying unit.

The above information processing apparatus can determine whether each user of the mobile terminal who viewed an advertisement got on board the vehicle after viewing the advertisement, and visited a shop (physical shop) at which the goods, etc. as a subject of the advertisement are sold, for example, based on the terminal movement history information and the vehicle movement history information. Accordingly, the information processing apparatus can measure the leading effect (leading conversion) to lead the users to the physical shop of the advertisement, such as an Internet advertisement, or a billboard or a digital signage around a road, based on the actual visit to the physical shop.

In the information processing apparatus as described above, when the track record specifying unit determines, based on the terminal movement history information of the mobile terminal of a first user who viewed the advertisement and is specified by the advertisement viewing user specifying unit, and the vehicle movement history information of the one or more vehicles having the possibility of being boarded by the first user and specified by the vehicle specifying unit, that the first user of the mobile terminal got on board one of the one or more vehicles and visited the physical shop, the track record specifying unit may determine, based on the terminal movement history information of a second user having a possibility of boarding the one vehicle specified by the vehicle specifying unit, whether the second user was on board the one vehicle when the first user visited the physical shop.

When the information processing apparatus determines that the user who viewed the advertisement got on board the vehicle and visited the shop, it can also determine whether another user who uses the vehicle was on board the vehicle. Thus, the information processing apparatus can measure a ripple effect of the advertisement to other uses who do not actually view the advertisement, as well as the leading effect of the advertisement.

The information processing apparatus may further include an advertisement delivery unit that delivers the advertisement to at least a part of the mobile terminals, and the advertisement viewing user specifying unit may specify the users who viewed the advertisement, based on a delivery history of the advertisement delivered to the mobile terminals by the advertisement delivery unit.

The above information processing apparatus can specify the users who viewed an advertisement, based on delivery history of the advertisement. Thus, the information processing apparatus can measure the leading effect to lead the users to the physical shop, which effect is provided by an advertisement in an application, or the like, that is delivered by the advertisement delivery unit to the mobile terminals, for example.

In the information processing apparatus as described above, the advertisement viewing user specifying unit may specify the users of the mobile terminals who viewed the advertisement delivered via the Internet, based on an Internet browsing history of each of the mobile terminals, or may specify the users of the mobile terminals who viewed the advertisement installed around a road, based on the terminal movement history information of each of the mobile terminals, and the vehicle movement history information of the one or more vehicles having the possibility of being boarded by the user of each of the mobile terminals and specified by the vehicle specifying unit.

The above information processing apparatus can specify the users of the mobile terminals who viewed a certain Internet advertisement, from the Internet browsing history of each mobile terminal. Also, the information processing apparatus can specify the users of the mobile terminals who viewed an advertisement, such as a billboard or a digital signage, which is installed around a certain road, by determining whether the user of each mobile terminal got on the vehicle and passed the road adjacent to the advertisement, from the terminal movement history information of each mobile terminal, and the vehicle movement history information of the vehicle having a possibility of being boarded by the user of the mobile terminal.

In the information processing apparatus as described above, the track record specifying unit may determine that one of the users of the mobile terminals who viewed the advertisement and are specified by the advertisement viewing user specifying unit visited the physical shop, when determining that the vehicle boarded by the one user was parked within a range of a parking space of the physical shop, or determining that the vehicle boarded by the one user steered away from a road at around a gateway of the parking space of the physical shop, or determining that the vehicle boarded by the one user returned onto a road from an outside of the road, at around the gateway of the parking space of the physical shop.

The above information processing apparatus can determine whether the user who viewed the advertisement got on board the vehicle and visited the physical shop, by checking or confirming a specific situation, for example, the case where the vehicle boarded by the user of the mobile terminal who viewed the advertisement was parked in a parking space of the physical shop.

The information processing apparatus as described above may further include an advertisement viewing user specifying unit that specifies users of the mobile terminals who viewed an advertisement installed around a road, from among the users of the mobile terminals, based on the terminal movement history information of the user of each of the mobile terminals, and the vehicle movement history information of the one or more vehicles having the possibility of being boarded by the user of each of the mobile terminals and specified by the vehicle specifying unit, and a track record specifying unit that determines whether each of the users who viewed the advertisement and are specified by the advertisement viewing user specifying unit actually visited a physical shop at which goods or services as a subject of the advertisement are sold or provided, after viewing the advertisement, based on the terminal movement history information of the mobile terminal of the user who viewed the advertisement and is specified by the advertisement viewing user specifying unit, and the vehicle movement history information of the one or more vehicles having the possibility of being boarded by the user and specified by the vehicle specifying unit, or determines whether each of the users who viewed the advertisement and are specified by the advertisement viewing user specifying unit actually purchased any of the goods or services via the Internet, after viewing the advertisement, based on an Internet browsing history of the mobile terminal of the user.

The above information processing apparatus can specify the users who viewed an advertisement, such as a billboard or a digital signage, installed around a certain road, by determining whether the user of each mobile terminal got on board the vehicle, and the vehicle passed the road adjacent to the advertisement, from the terminal movement history information of each mobile terminal, and the vehicle movement history information of the vehicle having a possibility of being boarded by the user of each mobile terminal. Then, the information processing apparatus can determine whether the user got on board the vehicle after viewing the advertisement, and visited the physical shop where the goods, etc. as a subject of the advertisement are sold, based on the terminal movement history information and the vehicle movement history information. Also, the information processing apparatus can determine the actual purchase of a commercial product, or the like, as a subject of the advertisement, via the Internet, from the Internet browsing history of the mobile terminal of the user who viewed the advertisement. Accordingly, the information processing apparatus can measure the leading effect (leading conversion) of the advertisement, such as a billboard or a digital signage, around the road, to lead the users to visit the physical shop, or lead the users to purchase the product, or the like, via the Internet, based on the actual visit to the physical shop, or the purchase history via the Internet.

An information processing system according to a second aspect of the invention includes a plurality of vehicles, a plurality of mobile terminals, a server operable to communicate with each of the vehicles and each of the mobile terminals, a vehicle movement history information storage unit that stores vehicle movement history information concerning vehicle movement histories of the vehicles, and a terminal movement history information storage unit that stores terminal movement history information concerning terminal movement histories of the mobile terminals. Each of the vehicle movement histories includes position information and clock time information on each of the vehicles, and each of the terminal movement histories includes position information and clock time information on each of the mobile terminals. The information processing system further includes a vehicle specifying unit that specifies one or more vehicles having a possibility of being boarded by a user of each of the mobile terminals, from among the vehicles, based on the vehicle movement history information stored in the vehicle movement history information storage unit, and the terminal movement history information stored in the terminal movement history information storage unit.

According to the above aspect of the invention, as in the case of the above information processing apparatus, the information processing system can specify one or more vehicles having a possibility of being boarded by the user of the mobile terminal, from among the vehicles that were actually boarded by the user. Accordingly, the information processing system can specify the user of the mobile terminal who is on board the vehicle with higher certainty, by monitoring the position information of the mobile terminal, and the position information of the specified vehicle(s) having a possibility of being boarded by the user of the mobile terminal.

The information processing system as described above may further include a moving means determining unit that is provided in each of the mobile terminals, and determines whether the user of the mobile terminal is traveling by vehicle as a moving means, and a terminal transmitting unit provided in each of the mobile terminals. The terminal transmitting unit may be configured to transmit the terminal movement history information of the mobile terminal at a first time when the moving means determining unit determines that the user of the mobile terminal is traveling by vehicle as the moving means, to the server, in a manner that enables the server to distinguish the terminal movement history information at the first time from the terminal movement history information of the mobile terminal at a second time when the moving means determining unit determines that the user of the mobile terminal is not traveling by vehicle as the moving means. The vehicle movement history information storage unit, the terminal movement history information storage unit, and the vehicle specifying unit may be provided in the server.

The information processing system can limit the terminal movement history information that should be processed on the server side provided with the main functions of the vehicle specifying unit, etc., to the terminal movement history information corresponding to the mobile terminals of which the users are determined as being traveling by vehicle as a moving means. Accordingly, the information processing system specifies the vehicle(s) having a possibility of being boarded by the user of the mobile terminal, at a reduced processing load, and can complete the process in a shorter time.

An information processing method according to a third aspect of the invention is performed by an information processing apparatus, and includes a step of storing vehicle movement history information concerning vehicle movement histories of a plurality of vehicles, and a step of storing terminal movement history information concerning terminal movement histories of a plurality of mobile terminals. Each of the vehicle movement histories includes position information and clock time information on each of the vehicles, and each of the terminal movement histories includes position information and clock time information on each of the mobile terminals. The information processing method further includes a step of specifying one or more vehicles having a possibility of being boarded by a user of each of the mobile terminals, from among the vehicles, based on the vehicle movement history information and the terminal movement history information.

According to the above aspect, as in the case of the above information processing apparatus, the information processing apparatus that performs the information processing method can specify one or more vehicles having a possibility of being boarded by the user of the mobile terminal, from among the vehicles that were actually boarded by the user. Thus, according to the information processing method, the information processing apparatus can specify the user of the mobile terminal who is on board the vehicle with higher certainty, by monitoring the position information of the mobile terminal, and the position information of the specified vehicle(s) having a possibility of being boarded by the user of the mobile terminal.

A non-transitory computer readable recording medium according to a fourth aspect of the invention records a program which causes a computer to execute the steps of: storing vehicle movement history information concerning vehicle movement histories of a plurality of vehicles, storing terminal movement history information concerning terminal movement histories of a plurality of mobile terminals, and specifying one or more vehicles having a possibility of being boarded by a user of each of the mobile terminals, from among the vehicles, based on the vehicle movement history information and the terminal movement history information. Each of the vehicle movement histories includes position information and clock time information on each of the vehicles, and each of the terminal movement histories includes position information and clock time information on each of the mobile terminals.

According to the above aspect of the invention, as in the case of the above information processing apparatus, execution of the program by the computer makes it possible to specify one or more vehicles having a possibility of being boarded by the user of the mobile terminal, from among the vehicles that were actually boarded by the user. Thus, according to the program, the computer can specify the user of the mobile terminal who is on board the vehicle with higher certainty, by monitoring the position information of the mobile terminal, and the position information of the specified vehicle(s) having a possibility of being boarded by the user of the mobile terminal.

An information processing apparatus according to a fifth aspect of the invention includes a vehicle movement history information obtaining unit that obtains vehicle movement history information concerning vehicle movement histories of a plurality of vehicles, a terminal movement history information obtaining unit that obtains terminal movement history information concerning terminal movement histories of a plurality of mobile terminals, a boarding assuming unit that assumes boarding of a user of one of the mobile terminals on one of the vehicles, based on the vehicle movement history information and the terminal movement history information, and a user group assuming unit that assumes two or more users of the mobile terminals assumed by the boarding assuming unit to be on board the same one of the vehicles, as a user group having a strong connection.

The information processing apparatus can grasp the users who are on board the vehicle together with higher certainty, by utilizing the high probability of boarding of the group of users assumed to have a strong connection, on the same vehicle, for example.

In the information processing apparatus as described above, the boarding assuming unit may use a movement track from start to stop of the vehicle, as the vehicle movement history information.

The information processing apparatus can assume the group of users having a strong connection, with higher certainty, because occupants of the vehicle are not likely to change, between start and stop of the vehicle.

In the information processing apparatus as described above, the boarding assuming unit may assume boarding of the user of the one mobile terminal on the one vehicle, when determining that position information of the vehicle at a given point in time, which is included in the vehicle movement history information, substantially coincides with position information of the mobile terminal at substantially the same point in time, which is included in the terminal movement history information.

The information processing apparatus can specifically assume boarding of the user of the mobile terminal on the vehicle.

According to the above aspects, the information processing apparatus, etc. capable of grasping the users who are on board the vehicles with higher certainty can be provided.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view schematically showing one example of the configuration of a movement information management system and an advertising management system according to one embodiment;
FIG. 2 is a functional block diagram showing one example of the functional configuration of a vehicle (electronic control unit (ECU));
FIG. 3 is a functional block diagram showing one example of the functional configuration of a mobile terminal (processor);
FIG. 4 is a functional block diagram showing one example of the functional configuration of a movement information management server;
FIG. 5 is view useful for explaining a process performed by a user picking unit of the movement information management server;
FIG. 6 is a view useful for explaining a vehicle-for-use database (DB) created in the movement information management server (storage unit);
FIG. 7 is a flowchart schematically showing one example of a process performed by the vehicle (ECU);
FIG. 8 is a flowchart schematically showing one example of a process performed by the mobile terminal (processor);
FIG. 9 is a flowchart schematically showing one example of a vehicle-for-use specifying process performed by the movement information management server (processor);
FIG. 10 is a flowchart schematically showing one example of an on-board specifying process performed by the movement information management server (processor);
FIG. 11 is a flowchart schematically showing one example of a boarding-movement tracking process performed by the movement information management server (processor);
FIG. 12 is a functional block diagram showing one example of the functional configuration of an advertising management server;
FIG. 13 is a flowchart schematically showing one example of an advertisement delivery process performed by the advertising management server (processor);
FIG. 14 is a flowchart schematically showing another example of the advertisement delivery process performed by the advertising management server (processor); and
FIG. 15 is a flowchart schematically showing one example of a leading effect measuring process performed by the advertising management server (processor).

### DETAILED DESCRIPTION OF EMBODIMENTS

One embodiment of the invention will be described with reference to the drawings.

### Configuration of Movement Information Management System

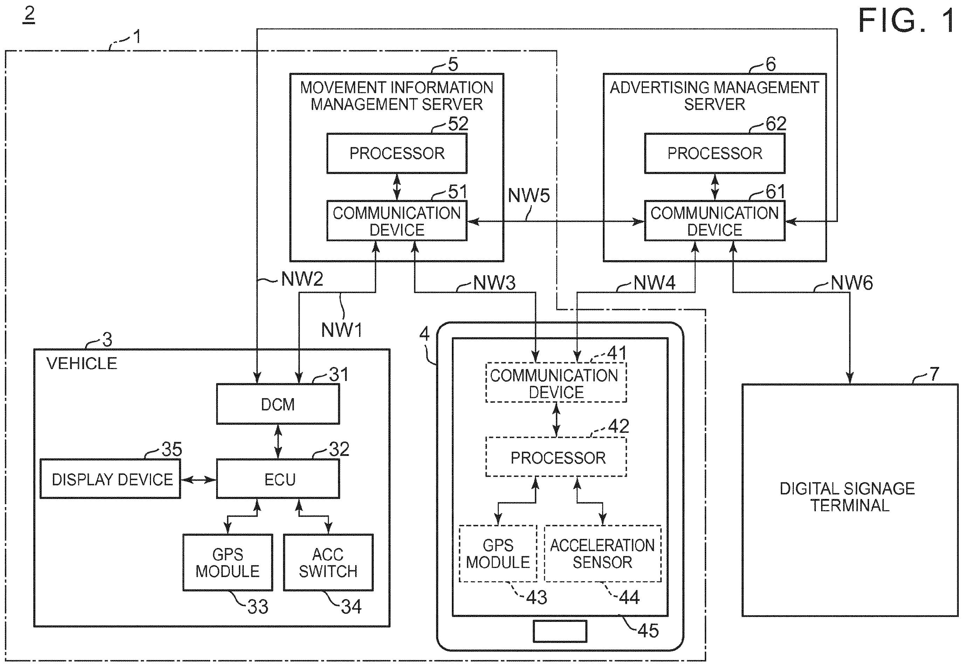

Referring first to FIG. 1 to FIG. 4, the configuration of a movement information management system 1 according to this embodiment will be described.

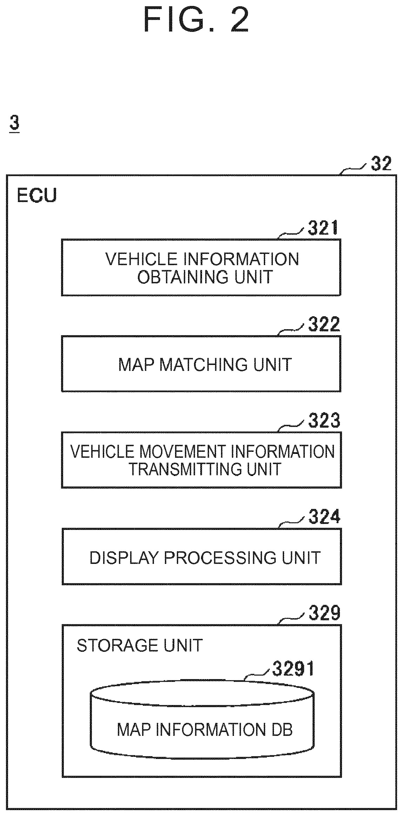

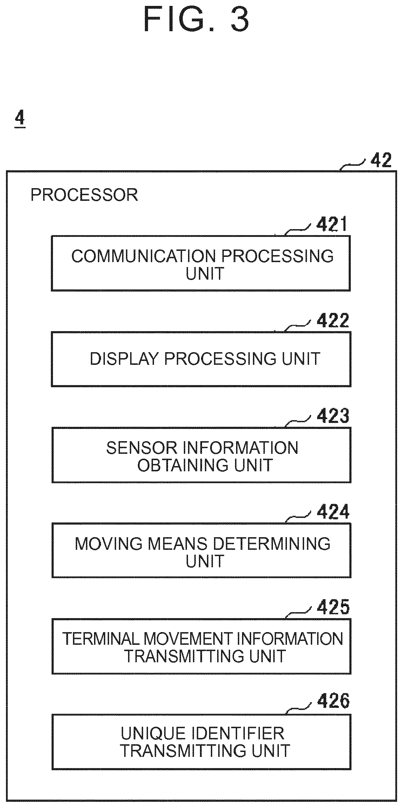

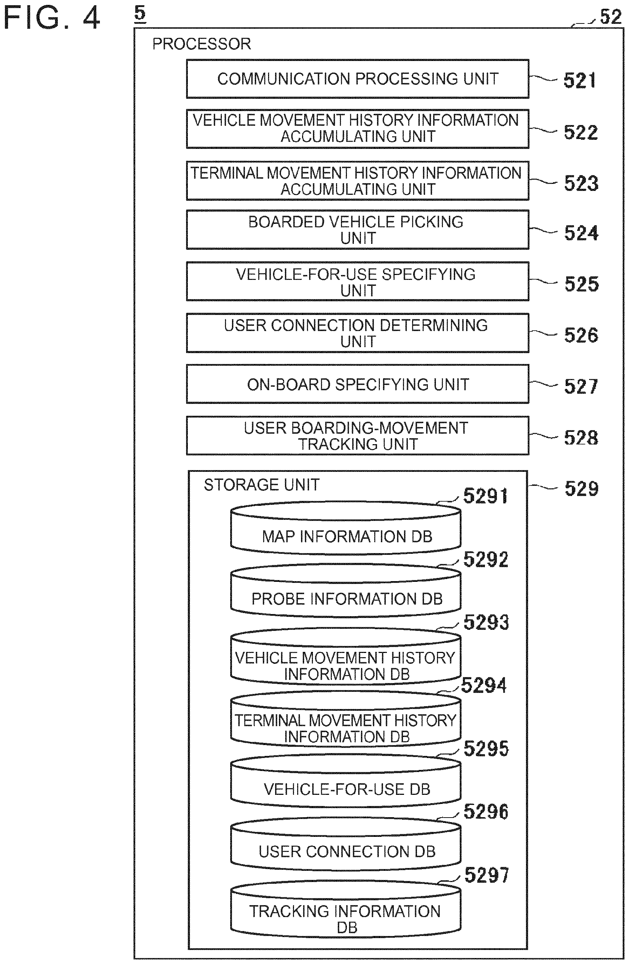

FIG. 1 schematically shows the configuration of a movement information management system 1 and an advertising management system 2 according to this embodiment. FIG. 2 schematically shows one example of the functional configuration of a vehicle 3 (an electronic control unit (ECU) 32) according to this embodiment. FIG. 3 schematically shows one example of the functional configuration of a mobile terminal 4 (a processor 42) according to this embodiment. FIG. 4 schematically shows one example of the functional configuration of a movement information management server 5 (a processor 52).

The movement information management system 1 includes a plurality of vehicles 3, a plurality of mobile terminals 4 carried by respective users, or the like, of the vehicles 3, and the movement information management server 5 communicably connected to the vehicles 3 and the mobile terminals 4. The movement information management system 1 collects various kinds of information, such as information concerning movement history, from each of the vehicles 3 and the mobile terminals 4, and manages information relating to movements of the vehicles 3 and the mobile terminals 4, as will be described in detail later.

Each of the vehicles 3 has the same configuration in connection with the movement information management system 1 and the advertising management system 2. Thus, in FIG. 1, a single vehicle 3 is typically illustrated. Similarly, each of the mobile terminals 4 has the same configuration in connection with the movement information management system 1 and the advertising management system 2. Thus, in FIG. 1, a single mobile terminal 4 is typically illustrated. Also, the mobile terminals 4 may include mobile terminals 4 of users other than the users using the vehicles 3.

The vehicle 3 includes a data communication module (DCM) 31, electronic control unit (ECU) 32, global positioning system (GPS) module 33, accessories power supply (ACC) switch 34, and display device 35.

The DCM 31 is a communication device that conducts bidirectional communications with the movement information management server 5 and the advertising management server 6, through communication networks NW1, NW2. The communication networks NW1, NW2 are, for example, mobile telephone networks or Internet networks, or the like, having a large number of base stations at their ends, like communication networks NW3 - NW6 that will be described later. The DCM 31 is connected to various electronic control units (ECUs) including the ECU 32, via an in-vehicle network, such as Controller Area Network (CAN), such that the DCM 31 and the ECUs can communicate with each other.

The ECU 32 is an electronic control unit that performs various control operations concerning given functions in the vehicle 3. The functions of the ECU 32 may be implemented by any hardware, software, or a combination thereof. For example, the ECU 32 may be mainly configured as a microcomputer, which includes a central processing unit (CPU), read-only memory (RAM), random access memory (ROM), auxiliary storage device, and input-output interface (I/O). For example, the ECU 32 includes a vehicle information obtaining unit 321, map matching unit 322, vehicle movement information transmitting unit 323, and display processing unit 324, as functional units that are implemented by executing one or more programs stored in the ROM or auxiliary storage device, on the CPU. The ECU 32 also includes a storage unit 329 as a storage area defined in the auxiliary storage device, for example. In the storage unit 329, map information database (DB) 3291 is stored.

A part of the functions of the ECU 32 may be shared with one or more ECUs other than the ECU 32.

The vehicle information obtaining unit 321 obtains information concerning vehicle conditions entered via the GPS module 33, ACC switch 34, etc., from a buffer in the RAM, for example. More specifically, the vehicle information obtaining unit 321 obtains position information of the vehicle 3 from the GPS module 33, and a signal (i.e., ON signal or OFF signal) concerning the ON/OFF state of the ACC switch 34 from the ACC switch 34.

The map matching unit 322 specifies a road link corresponding to the position information of the vehicle 3, namely, a road link on which the vehicle 3 is currently located, based on the map information DB 3291 stored in the storage unit 329, and the position information of the vehicle 3 obtained by the vehicle information obtaining unit 321. For example, identification information, such as a link identifier (ID), is assigned in advance to each of a plurality of road links that constitute a road network included in the map information DB 3291, and the map matching unit 322 specifies the link ID of the road link on which the vehicle 3 is currently located.

The map information DB 3291 includes nodes corresponding to intersections, road links corresponding to roads between adjacent ones of the intersections, namely, road links connecting the nodes, geographic information system (GIS) data including lines, polygons, etc. corresponding to features, such as buildings and roads, and so forth.

The vehicle movement information transmitting unit 323 generates information (vehicle movement information) concerning movement of the vehicle 3, and sends the information to the movement information management server 5, via the DCM 31. The vehicle movement information includes position information of the vehicle 3, clock time information corresponding to the position information of the vehicle 3, information (i.e., link ID information) concerning the road link corresponding to the position information of the vehicle 3 and specified by the map matching unit 322, and information concerning start-up or stop of the vehicle 3. The start-up of the vehicle 3 means starting up the vehicle such that it can travel, and may include engine start-up in the vehicle 3 having an engine as a main power source, or start of supply of electric power from a battery to a motor for driving the vehicle (turn-on (ON) of a power supply) in the vehicle 3 having the battery as a main power supply of the motor for driving the vehicle, for example. The stop of the vehicle 3 means stopping of the vehicle in a condition where it cannot travel, and may include engine stop in the vehicle 3 having the engine as the main power source, or stop of supply of electric power from the battery to the motor for driving the vehicle (turn-off (OFF) of the power supply) in the vehicle 3 having the battery as the main power supply of the motor for driving the vehicle. In this embodiment, information (ACC-ON information) to the effect that the ACC switch 34 is turned ON from the OFF state is employed, as the information concerning start-up of the vehicle 3, and information (ACC-OFF information) to the effect that the ACC switched 34 is turned OFF from the ON state is employed, as the information concerning stop of the vehicle 3.

The vehicle movement information transmitted from the vehicle 3 to the movement information management server 5 may not include clock time information corresponding to the position information of the vehicle 3. In this case, the movement information management server 5 may add a time of day at which the vehicle movement information was transmitted from the vehicle 3, a time of day at which the vehicle movement information was received by the movement information management server 5, or a time of day calculated from these times, at which the vehicle 3 is presumed to have been actually present at the position corresponding to the position information, as clock time information corresponding to the position information of the vehicle 3, to the vehicle movement information received from the vehicle 3.

The display processing unit 324 causes the display device 35 to display an information screen, according to operation by an occupant, such as a driver, of the vehicle 3. For example, the display processing unit 324 causes the display device 35 to display advertising information delivered from the advertising management server 6 (which will be described later) to the vehicle 3.

The GPS module 33 receives GPS signals transmitted from three or more, preferably, four or more satellites over the vehicle 3, and measures the position of the vehicle 3 on which the module 33 is installed. The GPS module 33 is communicably connected to the ECU 32, etc., via a one-on-one communication line, or an in-vehicle network, such as CAN, and transmits position information representing the measured position of the vehicle 3, to the ECU 32, etc.

The ACC switch 34 places the accessories power supply of the vehicle 3 in the ON or OFF state, according to operation by an occupant, such as a driver, of the vehicle 3. For example, the ACC switch 34 is turned on or off, according to operation on a power switch provided on an instrumental panel in the vicinity of a steering wheel at the driver's seat in the vehicle cabin. The power switch is a button-type switch that operates the ACC switch 34 and an ignition switch (IG switch). The ACC switch 34 is communicably connected to the ECU 32, etc., via a one-on-one communication line, or an in-vehicle network, such as CAN, and transmits its status signal (ON signal / OFF signal) to the ECU 32, etc.

The display device 35 is located at a position where it can be easily viewed from an occupant, such as a driver, of the vehicle 3, for example, located on a central, upper portion of the instrument panel in the vehicle cabin. The display device 35 displays various information screens, operation screens, and the like, under control of the ECU 32 (specifically, the display processing unit 324). The display device 35 is, for example, a touch-panel type liquid crystal display, or an organic electroluminescence (EL) display.

The mobile terminal 4 is, for example, a mobile telephone, smartphone, tablet, or the like, carried by the user of the vehicle 3. The mobile terminal 4 includes a communication device 41, processor 42, GPS module 43, acceleration sensor 44, and touch-panel display (which will be simply called "display") 45.

The communication device 41 conducts bidirectional communications with the movement information management server 5 and the advertising management server 6, via communication networks NW3, NW4, under control of the processor 42 (more specifically, a communication processing unit 421). The communication device 41 is, for example, a movement communication module corresponding to communications standards, such as Long Term Evolution (LTE), 4th Generation (4G), or 5th Generation (5G).

The processor 42 performs various control operations in the mobile terminal 4. The functions of the processor 42 may be implemented by any hardware, software, or a combination thereof. For example, the processor 42 may be mainly configured as a computer including CPU, RAM, ROM, auxiliary storage device, I/O, etc. For example, the processor 42 includes the communication processing unit 421, a display processing unit 422, a sensor information obtaining unit 423, a moving means determining unit 424, a terminal movement information transmitting unit 425, and a unique identifier transmitting unit 426, as functional units that are implemented by executing one or more programs stored in the ROM or auxiliary storage device, on the CPU.

The unique identifier transmitting unit 426 is configured to be related with the advertising management system 2, and thus will be described in detail later.

The communication processing unit 421 controls the communication device 41, and transmits and receives various signals to and from the movement information management server 5 and the advertising management server 6.

The display processing unit 422 causes the display 45 to display various images. For example, the display processing unit 422 causes the display 45 to display various types of graphical user interface (GUI) as operation screens. The display processing unit 422 also causes the display 45 to display advertising information delivered from the advertising management server 6 that will be described later.

The sensor information obtaining unit 423 obtains sensor information entered via various sensors, such as the GPS module 43, and the acceleration sensor 44, from a buffer, or the like, in the RAM. More specifically, the sensor information obtaining unit 423 obtains position information of the mobile terminal 4 received from the GPS module 43. The sensor information obtaining unit 423 also obtains information (acceleration information) concerning the acceleration of the mobile terminal 4 received from the acceleration sensor 44.

The moving means determining unit 424 determines whether the user carrying the mobile terminal 4 travels by vehicle (which will be simply referred to as "vehicle as a moving means") other than public transportation (bus) as a moving means, or the user travels by other moving means (such as walk, bicycle, train, or bus). For example, the moving means determining unit 424 may make the determination, by using a device that mechanically learned in advance to be able to distinguish between the case where the user is traveling by vehicle as a moving means, and the case where the user is traveling by a moving means other than vehicles, based on acceleration information received from the acceleration sensor 44. Also, for example, the moving means determining unit 424 may determine whether the user is traveling by vehicle as a moving means, or the user is traveling by a moving means other than vehicles, based on position information of the mobile terminal 4 received from the GPS module 43, in addition to or in place of the acceleration information received from the acceleration sensor 44.

In this embodiment, the public transportation does not include taxis. Namely, vehicles other than public transportation may include taxis. The moving means determining unit 424 may determine in a simple manner whether the user of the mobile terminal 4 is traveling by vehicle including public transportation (bus), or traveling by other moving means. Thus, simply by determining whether the moving velocity of the mobile terminal 4 is high or low, and whether the mobile terminal 4 is moving on a railway track, the moving means determining unit 424 can determine whether the user carrying the mobile terminal 4 is traveling by vehicle including public transportation as a moving means, or traveling by other moving means.

The terminal movement information transmitting unit 425 (one example of the terminal transmitting unit) generates information (terminal movement information) concerning movement of the mobile terminal 4, namely, movement of the user carrying the mobile terminal 4, and transmits the information to the movement information management server 5, via the communication processing unit 421. The terminal movement information may include the position information of the mobile terminal 4, a determination result obtained by the moving means determining unit 424, and so forth. The determination result indicates information as to whether the user of the mobile terminal 4 is traveling by vehicle as a moving means, for example, the presence or absence of a traveling-by-vehicle tag that will be described later.

The GPS module 43 receives GPS signals transmitted from three or more, preferably, four or more satellites over the mobile terminal 4, and measures the position of the mobile terminal 4 on which the module 43 is installed. The processor 42 receives position information representing the position of the mobile terminal 4 measured by the GPS module 43.

The position information of the mobile terminal 4 may also be obtained by base station positioning based on transmission of signals between the mobile terminal 4 and its base station, in place of or in addition to the GPS positioning by the GPS module 43.

The acceleration sensor 44 is a known detecting means for detecting the acceleration of the mobile terminal 4, using a microelectromechanical system (MEMS) technology, for example. The processor 42 receives a detection signal corresponding to the acceleration of the mobile terminal 4 detected by the acceleration sensor 44.

The movement information management server 5 (one example of the information processing apparatus) obtains (collects) information (vehicle movement information and terminal movement information) concerning movement from the respective vehicles 3 and the respective mobile terminals 4, and manages the information. The movement information management server 5 includes a communication device 51 and a processor 52.

The communication device 51 conducts bidirectional communications with the vehicle 3, mobile terminal 4, advertising management server 6 that will be described later, and so forth, via communication networks NW1, NW3, NW5, under control of the processor 52 (more specifically, a communication processing unit 521).

The processor 52 performs various control operations in the movement information management server 5. The functions of the processor 52 may be implemented by any hardware, software, or a combination thereof. For example, the processor 52 consists mainly of one or two or more server computers each including CPU, RAM, ROM, auxiliary storage device, I/O, etc. For example, the processor 52 includes the communication processing unit 521, a vehicle movement history information accumulating unit 522, a terminal movement history information accumulating unit 523, a boarded vehicle picking unit 524, a vehicle-for-use specifying unit 525, a user connection determining unit 526, an on-board specifying unit 527, and a user boarding-movement tracking unit 528, as functional units that are implemented by executing one or more programs stored in the ROM or auxiliary storage device, on the CPU. The processor 52 also includes, for example, a storage unit 529 as a storage area defined in the auxiliary storage device of the server computer, or an external storage device connected to the server computer. The storage unit 529 includes a map information database (DB) 5291, probe information database (DB) 5292, vehicle movement history information database (DB) 5293, terminal movement history information database (DB) 5294, vehicle-for-use database (DB) 5295, user connection database (DB) 5296, and tracking information database (DB) 5297.

The communication processing unit 521 controls the communication device 51, and transmits and receives various signals (e.g., control signals, information signals) to and from a plurality of vehicles 3, a plurality of mobile terminals 4, and the advertising management server 6 that will be described later.

The vehicle movement history information accumulating unit 522 (one example of the vehicle movement history information obtaining unit) obtains vehicle movement information which the communication processing unit 521 sequentially receives from a plurality of vehicles 3, and accumulates it in the vehicle movement history information DB 5293 (one example of the vehicle movement history information storage unit) as information (vehicle movement history information) concerning the movement history of the vehicles 3. More specifically, the vehicle movement history information accumulating unit 522 processes vehicle movement information received from each of the vehicles 3 by the communication processing unit 521, and accumulates the processed information in the vehicle movement history information DB 5293 as the vehicle movement history information of each vehicle 3. For example, the vehicle movement history information accumulating unit 522 generates information (trip information) concerning a movement history for one trip, namely, for each period from the time when each vehicle 3 is started to the time when the vehicle 3 is stopped, based on time-series data of vehicle movement information of each vehicle 3 stored in the probe information DB 5292. In other words, the vehicle movement history information accumulating unit 522 generates trip information from a point of departure to a destination for each trip of the vehicle 3. More specifically, the vehicle movement history information accumulating unit 522 determines start-up of the vehicle 3, based on the ACC-ON information included in the vehicle movement information, and defines the position information of the vehicle 3 included in the vehicle movement information including the ACC-ON information, as a starting point (departure point) of one trip of the vehicle 3. Also, the vehicle movement history information accumulating unit 522 defines position information of the vehicle 3 included in the most recent vehicle movement information including ACC-OFF information, out of vehicle movement information chronologically later than the above-indicated vehicle movement information, as an end point (destination) of one trip of the vehicle 3. Then, the vehicle movement history information accumulating unit 522 generates trip information, by gathering two pieces of vehicle movement information corresponding to both the starting point and end point of one trip of the vehicle 3, and a plurality of pieces of vehicle movement information (a group of pieces of vehicle movement information) present chronologically between the above two pieces of vehicle movement information, into one set of information. The vehicle movement history information accumulating unit 522 stores the generated trip information of each of the vehicles 3 in the vehicle movement history information DB 5293, as the vehicle movement history information of the vehicle 3.

The vehicle movement history information accumulating unit 522 may perform the above operation in real time, in response to probe information which the communication processing unit 521 sequentially receives from a plurality of vehicles 3, or may perform the operation on a regular basis, with respect to probe information that has been accumulated to a certain extent and has not been processed. In the probe information DB 5292, probe information including vehicle movement information and received from each of the vehicles 3 by the communication processing unit 521 is stored.

The terminal movement history information accumulating unit 523 (one example of the terminal movement history information obtaining unit) accumulates terminal movement information which the communication processing unit 521 sequentially receives from the respective mobile terminals 4, in the terminal movement history information DB 5294 (one example of the terminal movement history information storage unit), as information (terminal movement history information) concerning the movement history of the mobile terminal 4.

The terminal movement history information accumulating unit 523 may perform the above operation in real time, in response to terminal movement information which the communication processing unit 521 sequentially receives from a plurality of mobile terminals 4, or may perform the operation on a regular basis, with respect to terminal movement information that has been accumulated to a certain extent in the RAM, or the like, and has not been processed.

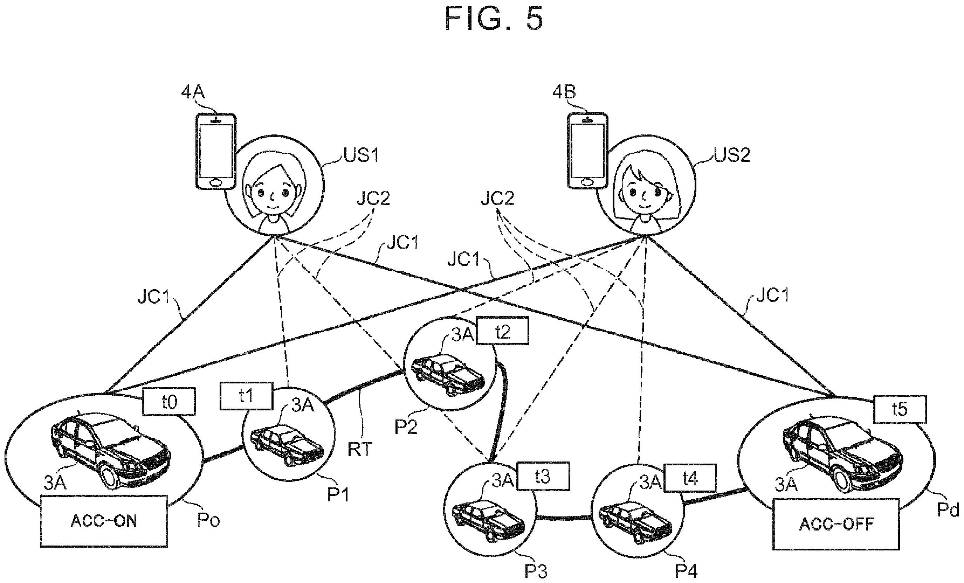

The boarded vehicle picking unit 524 (one example of the vehicle picking unit, and one example of the boarding assuming unit) picks out a vehicle or vehicles 3 presumed to be boarded by the user of each of the mobile terminals 4, based on the vehicle movement history information of the respective vehicles 3 and the terminal movement history information of the respective mobile terminals 4, which are accumulated in the vehicle movement history information DB 5293 and the terminal movement history information DB 5294. In other words, the boarded vehicle picking unit 524 picks out one or more vehicles 3 that have been actually boarded by the user of each of the mobile terminals 4, from among the vehicles 3. The view of FIG. 5 is useful for explaining processing by the boarded vehicle picking unit 524. In the example of FIG. 5, respective users US1, US2 of mobile terminals 4A, 4B included in the mobile terminals 4 rode together on a vehicle 3A included in the vehicles 3, and traveled from a point of departure Po to a destination Pd.

As shown in FIG. 5, the boarded vehicle picking unit 524 determines whether two conditions are satisfied, based on trip information, namely, based on the terminal movement history information of the mobile terminals 4A, 4B in the terminal movement history information DB 5294, and vehicle movement history information of the vehicle 3A in the vehicle movement history information DB 5293.

First, the boarded vehicle picking unit 524 determines whether a stay record condition JC1 indicating that the users US1, US2 actually stayed at the departure point Po and destination Pd of the vehicle 3A is satisfied. More specifically, the boarded vehicle picking unit 524 determines whether the terminal movement history information of the mobile terminal 4A indicates that the user US1 stayed around the departure point Po, within a predetermined time (e.g., 10 min.) before the time of start-up of the vehicle 3A, namely, the time of ACC-ON (time t0 in FIG. 5), in the trip information of the vehicle 3A. The boarded vehicle picking unit 524 also determines whether the terminal movement history information of the mobile terminal 4A indicates that the user US1 stayed around the destination Pd, within a predetermined time (e.g., 10 min.) after the time of stop of the vehicle 3A, namely, the time of ACC-OFF (time t5 in FIG. 5), in the trip information of the vehicle 3A. In this manner, the boarded vehicle picking unit 524 can determine that the user US1 of the mobile terminal 4A stayed at around the departure point Po and destination Pd of the vehicle 3A, in time slots in which the vehicle 3A was parked at the departure point Po and the destination Pd. The boarded vehicle picking unit 524 also performs the same operation on the terminal movement history information of the mobile terminal 4B of the user US2, so that it can determine that the user US2 stayed at around the departure point Po and destination Pd of the vehicle 3A, in the time slots in which the vehicle 3A was parked at the departure point Po and the destination Pd.

Secondary, the boarded vehicle picking unit 524 determines whether a synchronous movement condition JC2 indicating that the users US1, US2 were present at the same positions on a movement route RT at the same points in time as the vehicle 3A is satisfied. More specifically, the boarded vehicle picking unit 524 compares a data group of vehicle movement information (time information and position information) between the departure point Po and the destination Pd included in the trip information of the vehicle 3A, with a data group of terminal movement information (time information and position information) included in the terminal movement history information of the mobile terminal 4A over the same period of time as that of the above data group. Then, the boarded vehicle picking unit 524 determines that the synchronous movement condition JC2 is satisfied, when the position information of the vehicle 3A at a certain point in time included in the trip information (vehicle movement history information) coincides with the position information of the mobile terminal 4A at the same point in time included in the terminal movement history information. More specifically, the boarded vehicle picking unit 524 determines that the synchronous movement condition JC2 is satisfied, when there are two or more matches between the vehicle movement information of the vehicle 3A and the terminal movement information of the mobile terminal 4A, which make it possible to determine that the mobile terminal 4A and the vehicle 3A were present at the same positions at the same points in time. In the example shown in FIG. 5, for instance, it can be determined that the vehicle 3A and the mobile terminal 4A were present at the same points in time, at two local points, i.e., points P1, P3 on the movement route RT. Thus, the boarded vehicle picking unit 524 can determine that the user US1 of the mobile terminal 4A was on board the vehicle 3A between the departure point Po and the destination Pd. Also, in the example shown in FIG. 5, it can be determined that the vehicle 3A and the mobile terminal 4B were present at the same points in time, at three local points, i.e., points P2, P3, P4 on the movement route RT. Thus, the boarded vehicle picking unit 524 performs the same operation on the terminal movement history information of the mobile terminal 4B of the user US2, so that it can determine that the user US2 of the mobile terminal 4B was on board the vehicle 3A, along with the user US1 of the vehicle 3A, between the departure point Po and the destination Pd.

Thus, by searching for trip information of the vehicle 3 which satisfies both the stay record condition JC1 and the synchronous movement condition JC2, against the terminal movement history information of each of the mobile terminals 4, the boarded vehicle picking unit 524 can pick out the vehicle 3 boarded by the user of the mobile terminal 4.

The boarded vehicle picking unit 524 may pick out the vehicle 3 that has been actually boarded by the user of the mobile terminal 4, by using only the synchronous movement condition JC2, without taking account of the stay record condition JC1. Namely, when the position information of the vehicle 3 at a certain point in time included in the trip information (vehicle movement history information) coincides with the position information of the mobile terminal 4 at the same time included in the terminal movement history information, the boarded vehicle picking unit 524 may assume boarding of the user of the mobile terminal 4 on the vehicle 3. The boarded vehicle picking unit 524 may also perform the above operation in real time, in accordance with updating of the vehicle movement history information DB 5293 and the terminal movement history information DB5294 by the vehicle movement history information accumulating unit 522 and the terminal movement history information accumulating unit 523, respectively. The boarded vehicle picking unit 524 may also perform the above operation on a regular basis, with respect to the vehicle information history information and terminal movement history information that have been accumulated to a certain extent and have not been processed.

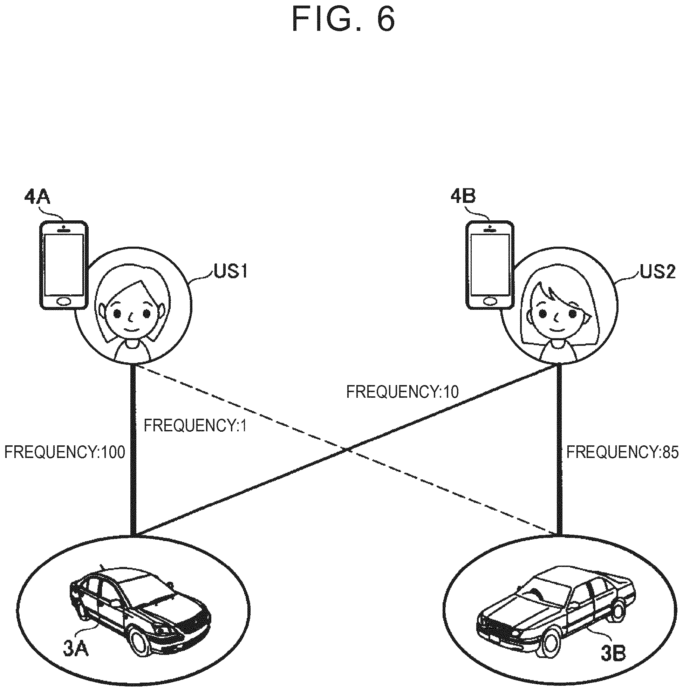

The vehicle-for-use specifying unit 525 (one example of the vehicle specifying unit) specifies a vehicle or vehicles 3 having a possibility of being boarded by the user of each of the mobile terminals 4. Such a vehicle 3 will be called "vehicle 3 for use by the user" for descriptive purposes. The vehicles 3 for use by the user of the mobile terminal 4 include not only the vehicles 3 for use by the user as a driver, but also the vehicles 3 for use by the user as a passenger on board with a driver. More specifically, the boarded vehicle picking unit 524 picks out the vehicles 3 boarded by the user of each of the mobile terminals 4, namely, the vehicles 3 that have been actually boarded by the user, and the vehicle-for-use specifying unit 525 specifies the vehicle 3 for use by the user of the mobile terminal 4, from among the vehicles 3 thus picked up by the boarded vehicle picking unit 524. The vehicle-for-use specifying unit 525 stores identification information indicating the specified vehicle 3 for use by the user of each of the mobile terminals 4, in the vehicle-for-use DB 5295, such that the information is associated with identification information indicating the mobile terminal 4, or identification information indicating the user of the mobile terminal 4. In the case as described below, the identification information (e.g., vehicle ID) of the vehicle 3 for use by the user of the mobile terminal 4 is stored in the vehicle-for-use DB 5295, such that the information is associated with the identification information (e.g., terminal ID) of the mobile terminal 4 concerned. At this time, the vehicle-for-use specifying unit 525 also stores the frequency of boarding (the number of times of boarding) on the specified vehicle 3 for use by the user of each of the mobile terminals 4, in the vehicle-for-use DB 5295. Namely, the vehicle-for-use specifying unit 525 creates the vehicle-for-use DB 5295, in such a manner that each of the mobile terminals 4, or the user of the mobile terminal 4, is associated with the vehicle 3 for use by the user of each mobile terminal 4, using the frequency of boarding (the number of times of boarding) representing the relationship therebetween. For example, FIG. 6 schematically shows a data model of the vehicle-for-use DB 5295 created by the vehicle-for-use specifying unit 525. In this example, the vehicles 3A, 3B included in the vehicles 3 are picked up by the boarded vehicle picking unit 524, as the vehicles 3 boarded by each of the users US1, US2 of the mobile terminals 4A, 4B included in the mobile terminals 4.

As shown in FIG. 6, the vehicle-for-use DB 5295 may be created as a graph type database. More specifically, the vehicle-for-use DB 5295 of this example may be created as a graph type database, such that a plurality of mobile terminals 4A, 4B or users US1, US2 thereof and vehicles 3A, 3B are regarded as nodes, and the nodes corresponding to the mobile terminals 4A, 4B or their users US1, US2 are associated with the nodes corresponding to the vehicles 3A, 3B, using the frequency of boarding (the number of times of boarding) as information (relationship information) indicating the relationship therebetween. More specifically, the mobile terminal 4A or its user US1 as a node is associated with the vehicles 3A, 3B, along with relationship information that the number of times of boarding is 100, and 1, respectively. Also, the mobile terminal 4B or its user US2 as a node is associated with the vehicles 3A, 3B, along with relationship information that the number of times of boarding is 10, and 85, respectively.

For example, when the user of the mobile terminal 4 has boarded the vehicle 3 even once, the vehicle-for-use specifying unit 525 may specify the vehicle 3 as a vehicle for use by the user of the mobile terminal 4. Also, for example, when the user of the mobile terminal 4 has boarded the vehicle 3 at a certain frequency, namely, when the frequency of boarding is equal to or higher than a predetermined threshold value (e.g., five times), the vehicle-for-use specifying unit 525 may specify the vehicle 3 as a vehicle for use by the user of the mobile terminal 4. In this case, when the frequency of boarding is lower than the predetermined threshold value, the vehicle-for-use specifying unit 525 may register the vehicle 3 in the vehicle-for-use DB 5295, in a status (provisionally specified status) in which the vehicle 3 is provisionally specified as a vehicle for use by the user of the mobile terminal 4 concerned. For example, when the number of boarding of the user US1 of the mobile terminal 4A on the vehicle 3B is very small, namely, when it is only once, as shown in FIG. 6, the vehicle 3B is registered in the provisionally specified status, to be associated with the mobile terminal 4A, or its user US1 (see the dotted line in FIG. 6).

As described above, the boarded vehicle picking unit 524 performs the operation to pick out the user or users who have actually boarded any of the vehicles 3, in real time, or on a regular basis, in accordance with updating of the vehicle movement history information DB 5293 and the terminal movement history information DB 5294. Thus, the vehicle-for-use specifying unit 525 updates the vehicle-for-use DB 5295, according to the result of the picking operation sequentially performed by the boarded vehicle picking unit 524. More specifically, when the boarded vehicle picking unit 524 determines that the user of the mobile terminal 4 rode a vehicle 3 which the user had not been on board so far, and newly picks out the vehicle 3, the vehicle-for-use specifying unit 525 stores the vehicle 3 in the vehicle-for-use DB 5295, in such a manner that the vehicle 3 is associated with the user of the mobile terminal 4 concerned, or the mobile terminal 4. Also, when the boarded vehicle picking unit 524 determines that the user of the mobile terminal 4 rode a vehicle 3 which the user had already actually boarded, and newly picks out the vehicle 3, the vehicle-for-use specifying unit 525 updates the frequency of boarding in the relationship information of the vehicle-for-use DB 5295.

Thus, the vehicle-for-use specifying unit 525 can create the vehicle-for-use DB 5295, such that a plurality of mobile terminals 4 or their users are associated with a plurality of vehicles 3, in terms of the relationship in the form of the boarding frequency, and can specify the vehicles 3 for use by the users of the mobile terminals 4. Also, the vehicle-for-use specifying unit 525 can update the boarding frequency (the number of times of boarding) as relationship information between each mobile terminal 4 or its user and each vehicle 3 in the vehicle-for-use DB 5295, when the boarded vehicle picking unit 524 sequentially picks out the vehicle 3 boarded by the user of each of the mobile terminals 4.

The vehicle-for-use vehicle DB 5295 may be created as a common relational database, rather than the graph type database.

The user connection determining unit 526 (one example of the user group assuming unit) determines a degree of connection between the users of a plurality of mobile terminals 4, based on the vehicle-for-use DB 5295. For example, when the same vehicle 3 is specified as a vehicle for use by the users of two or more mobile terminals 4, in the vehicle-for-use DB 5295, the user connection determining unit 526 can determine that the two or more users have a relatively intimate relationship, namely, a certain degree of mutual connection, which allows the users to be on board the vehicle 3 together, or borrow the vehicle 3 from each other. In other words, the user connection determining unit 526 assumes the users of two or more mobile terminals 4 who are presumed by the vehicle-for-use specifying unit 525 to be on board the same vehicle 3, as a user group having a strong linkage or connection.

In this case, the user connection determining unit 526 can determine the degree of connection (strength of the linkage) between the two or more users, based on the frequency of boarding of the two or more users on the vehicle 3. For example, when a difference in the frequency of boarding between two users using the same vehicle 3 is relatively small, the user connection determining unit 526 presumes that the two users are often on board together, or the two users often borrow the vehicle 3 from each other, and thus can determine that there is a strong connection between the users. On the other hand, when the difference in the boarding frequency is relatively large, the user connection determining unit 526 presumes that the two users are not often on board together, or the number of times the two users borrow the vehicle 3 from each other is relatively small (i.e., the two users do not often borrow the vehicle 3 from each other), and thus can determine that there is a weak connection between the users. For example, two or more levels of user connections are established based on one or more threshold values provided for the difference in the boarding frequency between the users, such that the connection is stronger as the difference in the boarding frequency is smaller, and the user connection determining unit 526 determines which level of connection to which the connection between two or more users corresponds.

Since the vehicle-for-use DB 5295 is updated sequentially, as described above, the user connection determining unit 526 sequentially performs operation to determine the connection between the users of the mobile terminals 4, in accordance with updating of the vehicle-for-use DB 5295. Then, the user connection determining unit 526 generates information (connection information), such as the level of connection as described above, concerning the connection between the users of the mobile terminals 4, and stores the information in the user connection DB 5296. Data of the user connection DB 5296 is transmitted to the advertising management server 6, via the communication processing unit 521, in response to updating of its content, or on a regular basis. In this connection, the transmitted data of the user connection DB 5296 may be difference data newly updated from that of the last data transmission.

The on-board specifying unit 527 determines whether the user of a certain mobile terminal 4 is actually on board the vehicle 3 for use by the user of the mobile terminal 4, based on the association relationship between the mobile terminals 4 and the vehicles 3, which relationship is stored in the vehicle-for-use DB 5295. For example, the on-board specifying unit 527 compares the current terminal movement information of each of the mobile terminals 4, with the current vehicle movement information of the vehicle 3 associated with the mobile terminal 4 in the vehicle-for-use DB 5295, in real time. Thus, the on-board specifying unit 527 is simply required to monitor only the vehicle movement history information of the vehicle 3 that is specified in advance as the vehicle for use by the user of the mobile terminal 4 concerned, in the vehicle-for-use DB 5295, and is thus able to determine whether the user of the mobile terminal 4 is on board the vehicle 3, within a practical length of processing time. Details of the operation performed by the on-board specifying unit 527 will be described later.

When the on-board specifying unit 527 determines that the user of a certain mobile terminal 4 is on board a certain vehicle 3, the user boarding-movement tracking unit 528 tracks a movement route from a point of departure to a destination of the vehicle 3. The user boarding-movement tracking unit 528 stores information (boarding and movement tracking information) concerning the movement route thus tracked, in the tracking information DB 5297, such that the information is associated with the mobile terminal 4 or the user of the mobile terminal 4, and the vehicle 3 that is being boarded by the user. More specifically, the user boarding-movement tracking unit 528 stores the boarding and movement tracking information, in such a manner as to associate it with identification information (e.g., terminal ID) of the mobile terminal 4 or identification information (e.g., user ID) of the user of the mobile terminal 4, and identification information (e.g., vehicle ID) of the vehicle 3 that is being boarded by the user. The boarding and movement tracking information includes, for example, point-of-interest (POI) information and area information corresponding to the departure point and the destination, information of link IDs, namely, road links corresponding to the movement route from the departure point to the destination, and so forth. Details of the operation performed by the user boarding-movement tracking unit 528 will be described later.

The on-board specifying unit 527 may determine that the users of two or more mobile terminals 4 are on board the vehicle 3. In this case, the user boarding-movement tracking unit 528 stores the boarding and movement tracking information obtained at this time, in the tracking information DB 5297, in such a manner as to associate it with identification information of the mobile terminals 4 of two or more users on board or identification information of the two or more users, and identification information of the vehicle 3 that is being boarded by the users.

### Details of Operation of Movement Information Management System

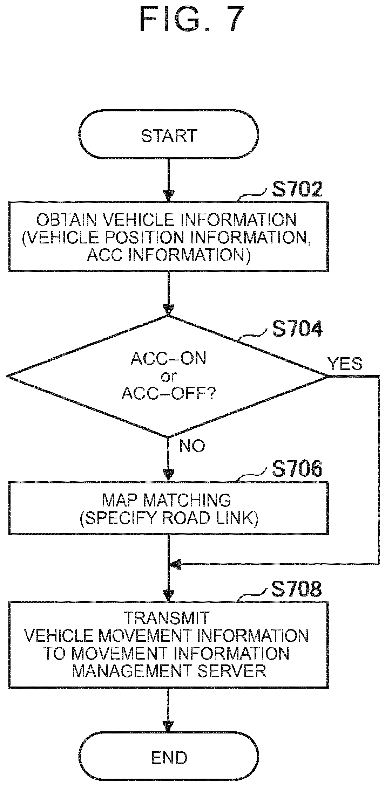

Referring next to FIG. 7 to FIG. 11, specific operation of the movement information management system 1 will be described.

The flowchart of FIG. 7 schematically illustrates one example of a process performed by the ECU 32 of the vehicle 3 according to this embodiment. The process according to this flowchart is repeatedly carried out, on a regular basis (for example, for each detection cycle of vehicle position information of the vehicle 3 by the GPS module 33), during a period from the ACC-ON of the vehicle 3, to a point in time after a lapse of a given length of time from the ACC-OFF as a starting point, for example.

In step S702, the vehicle information obtaining unit 321 obtains signals concerning the position information of the vehicle 3 and the ON/OFF state of the ACC switch 34, from the GPS module 33 and the ACC switch 34., respectively

In step S704, the ECU 32 determines whether the ACC switch 34 of the vehicle 3 is turned ON (ACC-ON), or turned OFF (ACC-OFF). For example, in the case where the process according to this flowchart is started in response to turn-on of the ACC switch 34, the ECU 32 may determine that the ACC switch 34 is turned ON (ACC-ON) in the first cycle of the process according to this flowchart. In the case where the process according to this flowchart is also performed while the vehicle 3 is in a parked state, the ECU 32 may determine that the ACC switch 34 is turned ON (ACC-ON) when a status signal from the ACC switch 34 changes from an OFF signal to an ON signal. The ECU 32 may also determine that the ACC switch 34 is turned OFF (ACC-OFF) when the status signal from the ACC switch 34 changes from the ON signal to the OFF signal. When the ACC switch 34 of the vehicle 3 is neither turned ON (ACC-ON) nor turned OFF (ACC-OFF), the ECU 32 proceeds to step S706. When the ACC switch 34 is turned ON (ACC-ON) or turned OFF (ACC-OFF), the ECU 32 proceeds to step S708.

In step S706, the map matching unit 322 specifies a road link (i.e., link ID) representing a road on which the vehicle 3 is currently located, based on the current position information of the vehicle 3 obtained by the vehicle information obtaining unit 321.

In step S708, the vehicle movement information transmitting unit 323 transmits the vehicle movement information including the position information of the vehicle 3, clock time information corresponding to the position information, and ACC-ON/OFF information or the link ID of the road link, to the movement information management server 5, via the DCM 31, and finishes the current cycle of the process. Thus, simply by checking the vehicle movement information, the movement information management server 5 can grasp the specific road link representing the road on which the vehicle 3 is located, and start (ACC-ON) and stop (ACC-OFF) of the vehicle 3, in addition to the position information of the vehicle 3, and the clock time information corresponding to the position information.

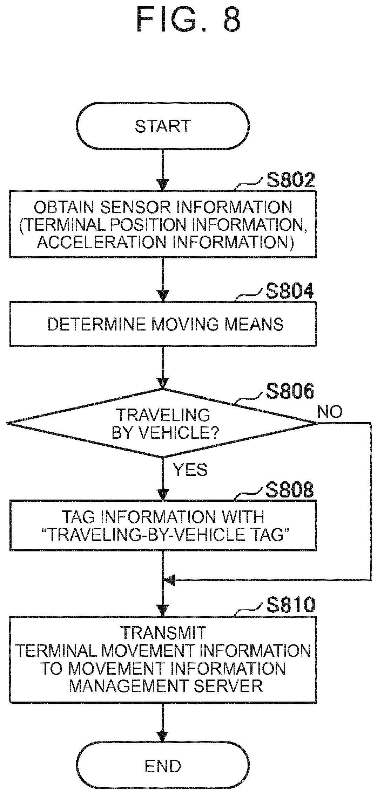

The flowchart of FIG. 8 schematically illustrates one example of a process performed by the processor 42 of the mobile terminal 4 according to this embodiment. The process according to this flowchart is repeatedly carried out, on a regular basis (for example, for each detection cycle of the GPS module 43), in a condition where the power supply of the mobile terminal 4 is ON. The process according to this flowchart may also carried out only when the power supply of the mobile terminal 4 is ON, and the GPS module 43 is able to obtain the position information of the mobile terminal 4 with relatively high accuracy, namely, the GPS module 43 is able to receive GPS signals.

In step S802, the sensor information obtaining unit 423 obtains the latest position information and acceleration information of the mobile terminal 4 from the GPS module 43 and the acceleration sensor 44.

In step S804, the moving means determining unit 424 determines whether the user of the mobile terminal 4 is traveling by vehicle as a moving means, or traveling by other moving means, based on the acceleration information of the mobile terminal 4 obtained by the sensor information obtaining unit 423.

When the moving means determining unit 424 determines in step S806 that the user of the mobile terminal 4 is traveling by vehicle as a moving means, it proceeds to step S808. When the user of the mobile terminal 4 is traveling by a moving means other than vehicle, except public transportation, the moving means determining unit 424 skips step S808, and proceeds to step S810.

In step S808, the terminal movement information transmitting unit 425 tags terminal movement information with "traveling-by-vehicle tag" indicating that the user of the mobile terminal 4 concerned is traveling by vehicle as a moving means.

In step S810, the terminal movement information transmitting unit 425 transmits terminal movement information including the position information of the mobile terminal 4 and the clock time information corresponding to the position information, to the movement information management server 5, via the communication processing unit 421, and finishes the current cycle of the process. Thus, the movement information management server 5 can obtain the terminal movement information, such that it can distinguish between the case where the mobile terminal 4 is moving in a vehicle except public transportation, and the case where the mobile terminal 4 is moving in a moving means other than the vehicle except public transportation.

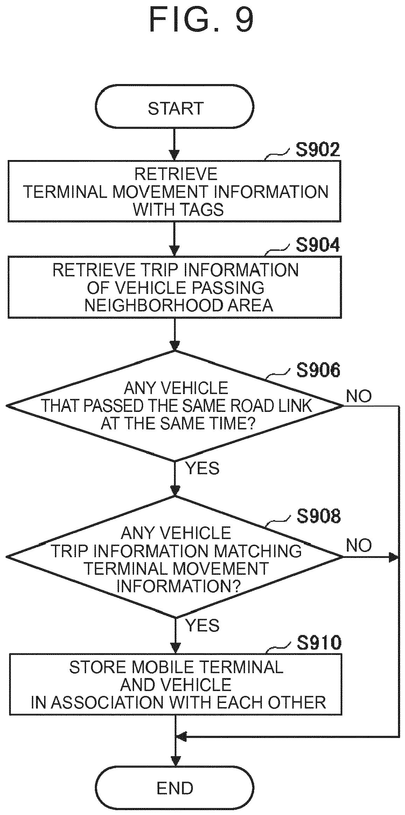

The flowchart of FIG. 9 schematically illustrates one example of a process (vehicle-for-use specifying process) for specifying one or more vehicles 3 for use by the user of each of the mobile terminals 4, by the processor 52 of the movement information management server 5 according to this embodiment. The process according to this flowchart may be performed in real time, in response to updating of the vehicle movement history information DB 5293 and the terminal movement history information DB 5294, with respect to the updated vehicle movement history information and terminal movement history information, as described above. Also, the process according to this flowchart may be performed for each predetermined cycle, with respect to the vehicle movement history information and terminal movement history information that have been updated in one cycle of the flowchart but have not been processed, in the vehicle movement history information DB5293 and the terminal movement history information DB5294, as described above.

In step S902, the boarded vehicle picking unit 524 retrieves a data group of terminal movement information with the traveling-by-vehicle tags, from the terminal movement history information (a data group of terminal movement information) to be processed, in the terminal movement history information DB 5294. As a result, the process of steps S904 to S910 is performed only with respect to the terminal movement information of the mobile terminal 4 of the user who is highly likely to be on board any of the vehicles 3, out of the terminal movement history information to be processed. Thus, the overall processing efficiency is improved, and the length of time it takes until completion of the process can be shortened.

When there are two or more mobile terminals 4 corresponding to the data group of terminal movement information picked out in step S902, the process of steps S904 to S910 is performed on each of the mobile terminals 4.

In step S904, the boarded vehicle picking unit 524 retrieves trip information of vehicles 3 that passed a neighborhood area (e.g., within one kilometer) of the position information of the data group of terminal movement information of the mobile terminal 4 retrieved in step S902, in a time slot of clock time information included in the time-series data group of the terminal movement information, from the vehicle movement history information DB 5293.

In step S906, the boarded vehicle picking unit 524 determines whether there is any vehicle 3 that passed the same road link at the same time as the mobile terminal 4, based on the time-series data group of the terminal movement information, and the retrieved trip information. When there is any vehicle 3 that passed the same road link at the same time as the mobile terminal 4, the boarded vehicle picking unit 524 proceeds to step S908. When there is no vehicle 3 that passed the same road link at the same time as the mobile terminal 4, the current cycle of the process ends.

In step S908, the boarded vehicle picking unit 524 specifically determines whether there is any trip information of the vehicle 3 which matches the time-series data group of the terminal movement information. For example, the boarded vehicle picking unit 524 searches for trip information of the vehicle 3 which matches the time-series data group of the terminal movement information of the mobile terminal 4, based on whether the stay history condition and the synchronous movement condition are both satisfied, as described above. When there is any trip information of the vehicle 3 which matches the time-series data group of the terminal movement information, the boarded vehicle picking unit 524 determines that the user of the mobile terminal 4 was on board the vehicle 3 corresponding to the trip information, and proceeds to step S910. When there is no trip information of the vehicle 3 which matches the time-series data group of the terminal movement information, the current cycle of the process ends.

In step S910, the vehicle-for-use specifying unit 525 stores the identification information (vehicle ID) of the vehicle 3 corresponding to the trip information that matches the time-series data group of the terminal movement information of the mobile terminal 4 concerned, in the vehicle-for-use DB 5295, such that the identification information (vehicle ID) is associated with the identification information (terminal ID or user ID) of the mobile terminal 4 or its user. Then, the current cycle of the process ends. In this manner, the vehicle-for-use specifying unit 525 can store the vehicle 3 boarded by the user of the mobile terminal 4 and picked out by the boarded vehicle picking unit 524, in a condition where the vehicle 3 is specified as being used by the user of the mobile terminal 4, or in a condition where it is provisionally specified as being used by the user of the mobile terminal 4, as described above.

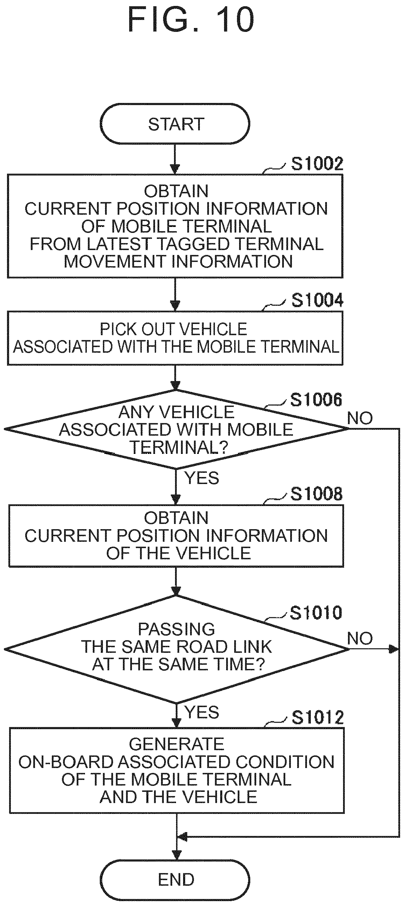

The flowchart of FIG. 10 schematically illustrates one example of an on-board specifying process performed by the processor 52 of the movement information management server 5 according to this embodiment. The process according to this flowchart is repeatedly carried out at given time intervals, during operation of the movement information management server 5 (processor 52), for example.

In step S1002, the on-board specifying unit 527 obtains, from the terminal movement information with the traveling-by-vehicle tag, out of the latest terminal movement information in the terminal movement history information DB 5294, the current position information of the mobile terminal 4 corresponding to the tagged terminal movement information, and corresponding clock time information.

When there are two or more mobile terminals 4 corresponding to the terminal movement information with the traveling-by-vehicle tag, the process of step S1004 to step S1012 below is performed on each of the mobile terminals 4.

In step S1004, the on-board specifying unit 527 picks out the vehicle 3 stored in the vehicle-for-use DB 5295 while being associated with the mobile terminal 4 corresponding to the obtained terminal movement information, namely, the vehicle 3 for use by the user of the mobile terminal 4 concerned.

In step S1006, the on-board specifying unit 527 determines whether any vehicle 3 associated with the mobile terminal 4 concerned could be picked out in step S1004, namely, any vehicle 3 for use by the user of the mobile terminal 4 is stored in the vehicle-for-use DB 5295. When there is a vehicle 3 associated with the mobile terminal 4 concerned, the on-board specifying unit 527 proceeds to step S1008. Otherwise, the current cycle of the process ends.

In step S1008, the on-board specifying unit 527 obtains the current position information of the vehicle 3 picked out in step S1006 and corresponding clock time information, from the latest vehicle movement information of the vehicle 3 stored in the probe information DB 5292 or the vehicle movement history information DB 5293.

In step S1010, the on-board specifying unit 527 determines whether the mobile terminal 4 and the vehicle 3 are passing the same road link at the same clock time, based on the current position information of the mobile terminal 4 and the vehicle 3, and the map information DB 5291. For example, the on-board specifying unit 527 determines whether the mobile terminal 4 and the vehicle 3 are passing the same road link at the same clock time, by comprehensively taking account of a difference between the current position information of the mobile terminal 4 and the current position information of the vehicle 3, a difference between the clock time information corresponding to the current position information of the mobile terminal 4 and the clock time information corresponding to the current position information of the vehicle 3, and the content of determination in this step of the cycles prior to the current cycle, for example. When the on-board specifying unit 527 determines that the mobile terminal 4 and the vehicle 3 are passing the same road link at the same clock time, it proceeds to step S1012. Otherwise, the current cycle of the process ends.

In step S1012, the on-board specifying unit 527 generates an on-board associated condition of the mobile terminal 4 and the vehicle 3, which indicates that the user of the mobile terminal 4 is on board the vehicle 3, and finishes the current cycle of the process. Thus, the movement information management server 5 (for example, the user boarding-movement tracking unit 528, etc.) and the advertising management server 6 that will be described later can determine whether the user of the mobile terminal 4 is on board the vehicle 3, based on whether the mobile terminal 4 and the vehicle 3 are in the on-board associated condition.

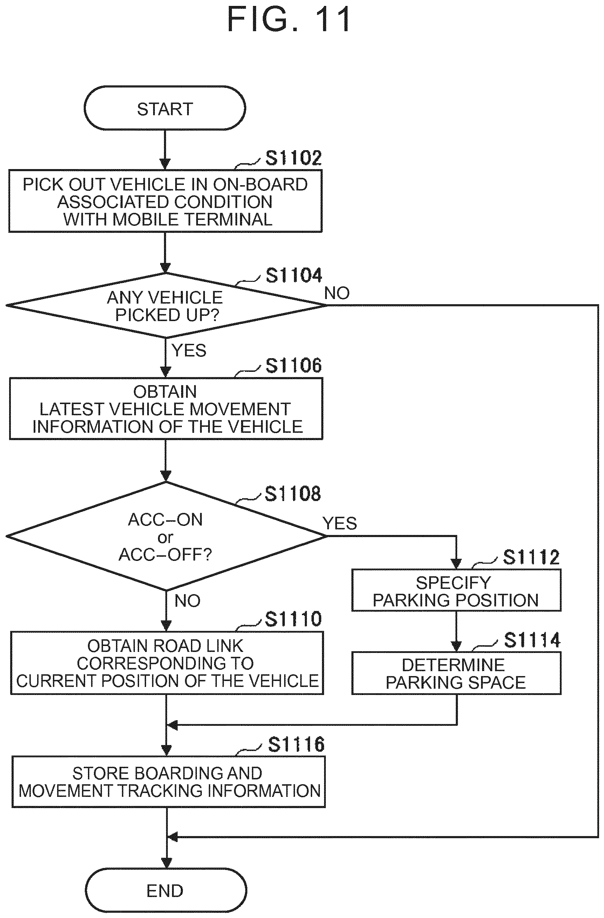

The flowchart of FIG. 11 schematically illustrates one example of a process (user boarding and movement tracking process) performed by the processor 52 of the movement information management server 5 according to this embodiment, for tracking a movement route of a certain vehicle 3 that is being boarded by the user of a certain mobile terminal 4. The process according to this flowchart is repeatedly carried out at predetermined time intervals, during operation of the movement information management server 5 (processor 52), for example. The process according to this flowchart is also performed with respect to each of the mobile terminals 4.

In step S1102, the user boarding-movement tracking unit 528 picks out a vehicle 3 that is in the on-board associated condition with the mobile terminal 4 concerned, from the vehicles 3 stored in the vehicle-for-use DB 5295 while being associated with the mobile terminal 4 or the user thereof.

In step S1104, the user boarding-movement tracking unit 528 determines whether it could pick out any vehicle 3 that is in the on-board associated condition with the mobile terminal 4 concerned. When the user boarding-movement tracking unit 528 could pick out the vehicle 3 that is in the on-board associated condition with the mobile terminal 4, it proceeds to step S1106. When the user boarding-movement tracking unit 528 could not pick out any vehicle 3 that is in the on-board associated condition with the mobile terminal 4, it finishes the current cycle of the process.

In step S1106, the user boarding-movement tracking unit 528 obtains the latest vehicle movement information of the vehicle 3 thus picked out, which information is stored in the probe information DB 5292 or the vehicle movement history information DB 5293.

In step S1108, the user boarding-movement tracking unit 528 determines whether the vehicle 3 picked out in step S1104 is placed in the ACC-ON state or the ACC-OFF state, based on the obtained vehicle movement information. Namely, the user boarding-movement tracking unit 528 determines whether the obtained vehicle movement information includes ACC-ON information or ACC-OFF information. The user boarding-movement tracking unit 528 proceeds to step S1110 when the obtained vehicle movement information does not include the ACC-ON information and the ACC-OFF information, and proceeds to step S1112 when the obtained vehicle movement information includes the ACC-ON information or the ACC-OFF information.

In step S1110, the user boarding-movement tracking unit 528 obtains information concerning the road link, i.e., link ID, corresponding to the current position of the vehicle 3, from the vehicle movement information, and proceeds to step S1116.

On the other hand, in step S1112, the user boarding-movement tracking unit 528 specifies a parking position of the vehicle 3, based on the vehicle movement information. Namely, the user boarding-movement tracking unit 528 specifies a point of interest (POI) (such as a facility, or a shop) corresponding to a location where the vehicle 3 is parked, based on the position information of the vehicle 3 included in the vehicle movement information, and the map information DB 5291. For example, the user boarding-movement tracking unit 528 specifies a candidate POI representing a location which the user of the mobile terminal 4 is presumed to visit, from the vehicle 3 that is parked.

In step S1114, the user boarding-movement tracking unit 528 determines whether the specified parking position of the vehicle 3 is within a parking space of the candidate POI, and proceeds to step S1116. For example, the user boarding-movement tracking unit 528 may determine whether the parking position of the vehicle 3 is within the parking space of the candidate POI, by determining whether the position information of the vehicle 3 is included in a range of a polygon representing the parking space of the candidate POI included in the map information DB 5291. Also, for example, the user boarding-movement tracking unit 528 may determine whether the parking position of the vehicle 3 is within the parking space of the candidate POI, by determining whether the vehicle 3 steers away from a road link to the outside of the road link, at around a gateway of the parking space of the candidate POI, based on the vehicle movement information obtained immediately before the vehicle 3 is placed in the ACC-OFF state, and the map information DB 5291. Also, for example, the user boarding-movement tracking unit 528 may determine whether the parking position of the vehicle 3 is within the parking space of the candidate POI, by determining whether the vehicle 3 returns from outside of the road link, back onto the road link, at around the gateway of the parking space of the candidate POI, based on the vehicle movement information obtained immediately after the vehicle 3 is placed in the ACC-ON state, and the map information DB 5291.

In step S1116, the user boarding-movement tracking unit 528 stores the information concerning the road link (i.e., link ID) obtained in step S1110, or the boarding and movement tracking information including the parking position (such as information concerning the candidate POI) of the vehicle 3 specified in step S1112, and the result of determination in step S1114, in the tracking information DB 5297, such that these pieces of information are associated with the mobile terminal 4 and the vehicle 3. Then, the current cycle of the process ends. This process makes it possible to retroactively refer to the information (such as candidate POI information, and the result of determination as to whether the vehicle 3 was parked in the parking space of the candidate POI) concerning the movement route, departure point, and destination when the user of the mobile terminal 4 got on board the vehicle 3 and moved. Namely, by retroactively grasping what movement route through which the user of the mobile terminal 4 traveled and what destination the user visited, it is possible to specify the preference, etc. of the user of the mobile terminal 4, and use the above information for delivery of targeted advertisement, and selection of the installation place of digital signage, for example. It also makes it possible to determine the actual visit to a physical shop (where goods, or the like, as a subject of advertisement are sold) as a guidance destination to which the advertisement leads the user, as will be described later.

### Operation of Movement Information Management System

In this embodiment, the vehicle-for-use specifying unit 525 specifies a vehicle or vehicles 3 having a possibility of being boarded by each of users of a plurality of mobile terminals 4, from a plurality of vehicles 3, based on the vehicle movement history information of the vehicles 3 accumulated in the vehicle movement history information DB 5293, and the terminal movement history information of the mobile terminals 4 accumulated in the terminal movement history information DB 5294.

With the above configuration, for example, the movement information management server 5 compares the vehicle movement history information of the vehicles 3 with the terminal movement history information of the mobile terminals 4, and can determine that the user of the mobile terminal 4 was on board the vehicle 3, with respect to a part or the whole of the vehicle movement history information having substantially the same position information and clock time information as the terminal movement history information. Thus, the movement information management server 5 can specify the vehicle 3 having a possibility of being boarded by the user of the mobile terminal 4, from among the vehicles 3 that have been actually boarded by the user. Accordingly, for example, the movement information management server 5 can more reliably specify the user of the mobile terminal 4 who is on board the vehicle 3 thus specified, by monitoring the position information of the mobile terminal 4, and the position information of the vehicle 3 having a possibility of being boarded by the user of the mobile terminal 4.

Also, in this embodiment, the boarded vehicle picking unit 524 picks out one or more vehicles 3 boarded by each of users of a plurality of mobile terminals 4, from among a plurality of vehicles 3, based on the vehicle movement history information of the vehicles 3 accumulated in the vehicle movement history information DB 5293, and the terminal movement history information of the mobile terminals 4 accumulated in the terminal movement history information DB 5294. Then, the vehicle-for-use specifying unit 525 specifies the vehicle(s) 3 having a possibility of being boarded by each of the users of the mobile terminals 4, from among the vehicles 3 boarded by the user of the mobile terminal 4 and picked up by the boarded vehicle picking unit 524.

With the above configuration, the movement information management server 5 specifically picks out the vehicles 3 that have been actually boarded by the user of each of the mobile terminals 4, so that it can specify the vehicle(s) 3 having a possibility of being boarded by the user of the mobile terminal 4, from the vehicles 3 thus picked out.

When the terminal movement history information of a certain mobile terminal 4 indicates, with regard to a movement route from a departure point to a destination included in the vehicle movement history information of a certain vehicle 3, that the mobile terminal 4 stayed in the vicinities of the departure point and the destination, in the time slots in which the vehicle 3 was parked at the departure point and the destination, and that the mobile terminal 4 was present at the same position on the movement route, at the same clock time, as the vehicle 3, the boarded vehicle picking unit 524 picks out the vehicle 3 as the one boarded by the user of the mobile terminal 4.

Thus, the movement information management server 5 can specifically determine whether the user of the mobile terminal 4 was on board the vehicle 3, and can pick out the vehicle 3 boarded by the user of the mobile terminal 4, from among the vehicles 3.

In this embodiment, the vehicle-for-use specifying unit 525 selects the vehicle 3 of which the frequency of boarding is equal to or higher than the predetermined threshold value, from the vehicles 3 that have been boarded by the user of each of the mobile terminals 4 and are picked up by the boarded vehicle picking unit 524, and specifies it as the vehicle 3 having a possibility of being boarded by the user of the mobile terminal 4.

Thus, the movement information management server 5 can specify the vehicle 3 having a relatively high boarding frequency, out of the vehicles 3 that have been actually boarded by the user of each of the mobile terminals 4 and are picked out, as the vehicle 3 having a possibility of being boarded by the user of the mobile terminal 4. Accordingly, the movement information management server 5 is less likely or unlikely to encounter a situation as follows: the movement information management server 5 specifies a vehicle 3 having a considerably low frequency of boarding, e.g., a vehicle 3 which the user happens to be on board only once, as the vehicle 3 having a possibility of being boarded by the user of the mobile terminal 4, whereby the process for determining whether the user is on board the vehicle 3 is wastefully carried out.

In this embodiment, the moving means determining unit 424 of each mobile terminal 4 determines whether the user of the mobile terminal 4 is traveling by vehicle as a moving means. Then, the terminal movement information transmitting unit 425 of the mobile terminal 4 transmits the terminal movement information of the mobile terminal 4 at the time when the moving means determining unit 424 determines that the user of the mobile terminal 4 is traveling by vehicle as a moving means, to the movement information management server 5, such that it can be distinguished from terminal movement information of the mobile terminal 4 at the time when the moving means determining unit 424 determines that the user of the mobile terminal 4 is not traveling by vehicle 3 as the moving means.

In this manner, the movement information management system 1 can limit the terminal movement history information to be processed by the main functions, such as the vehicle-for-use specifying unit 525, on the movement information management server 5 side, to the terminal movement history information corresponding to the time when it is determined that the user of the mobile terminal 4 is traveling by vehicle as a moving means. Accordingly, the movement information management system 1 can reduce a processing load for specifying the vehicle 3 having a possibility of being boarded by the user of the mobile terminal 4, and can complete the process in a shorter time.

In this embodiment, each mobile terminal 4, or its user, and each vehicle 3 having a possibility of being boarded by the user of the mobile terminal 4 and specified by the vehicle-for-use specifying unit 525, are associated with each other, and stored in the vehicle-for-use DB 5295. Then, the on-board specifying unit 527 determines whether the user of the mobile terminal 4 concerned is being on board the vehicle 3, based on the current position information of the mobile terminal 4, and the current position information of the vehicle 3 stored in the vehicle-for-use DB 5295 while being associated with the mobile terminal 4 or its user.

Thus, the movement information management server 5 can relatively easily determine whether the user of the mobile terminal 4 is being on board the vehicle 3, by monitoring the current position information of each mobile terminal 4, and the current position information of the vehicle 3 stored in association with the mobile terminal 4 or its user. Accordingly, the movement information management server 5 can determine in real time, for example, whether the user of each mobile terminal 4 is being on board the vehicle 3. In the meantime, when the users of two or more mobile terminals 4 are on board the vehicle 3 together and travel together, it is difficult to determine, only based on the terminal movement information of the mobile terminals 4, whether the users of the two or more mobile terminals 4 are on board the vehicle 3 together and travel together, since the determination depends on the accuracy of the position information, the timing of acquisition of the terminal movement information, etc. On the other hand, in this embodiment, when the users of the two or more mobile terminals 4 are associated with the same vehicle 3, the movement information management server 5 can relatively accurately determine whether the users of the two or more mobile terminals 4 are on board together, via the vehicle 3.

In this embodiment, the user connection determining unit 526 determines the degree of connection between the respective users of a plurality of mobile terminals 4, based on the vehicle(s) 3 having a possibility of being boarded by the user of each of the mobile terminals 4 and specified by the vehicle-for-use specifying unit 525.

Thus, when the same vehicle is specified as a vehicle 3 having a possibility of being boarded by the users of two or more mobile terminals 4, for example, the movement information management server 5 can determine that the two or more users are related with each other have such that they are on board together, or borrow the vehicle 3 from each other, for example. Accordingly, the movement information management server 5, advertising management server 6 that will be described later, etc. can deliver advertising information or recommendations taking account of the common preference or taste of the users, to the mobile terminal 4 of each user, in a situation where the two or more users determined as having some degree of connection are located at the same position. Thus, the movement information management server 5, etc. can deliver advertising information and recommendations taking account of the common preference or taste, to a group of related users having a possibility of acting together, as a target, for improvement of the effect provided by delivery of the advertising information and recommendations.

Also, in this embodiment, when the vehicle-for-use specifying unit 525 specifies the same vehicle as the vehicle 3 having a possibility of being boarded by the users of two or more mobile terminals 4, the user connection determining unit 526 determines the degree of connection between the two or more users, according to the frequency of boarding of each of the two or more users onto the same vehicle.

Thus, when the same vehicle is specified as the vehicle 3 having a possibility of being boarded by two users, for example, and when a difference in the frequency of boarding on the same vehicle between the two users is relatively small, the movement information management server 5 can determine that the two users are often on board together, and have a strong connection. On the other hand, when a difference in the frequency of boarding on the same vehicle between the two users is relatively large, the movement information management server 5 can determine that the two users are not often on board together, and have a weak connection, for example. Accordingly, when the two or more users who are on board the vehicle 3 have a relatively strong connection, as in the case of family members or close friends, for example, the movement information management server 5 and the advertising management server 6 that will be described later can deliver advertising information or recommendations taking account of the common preference or taste of the users, to the mobile terminal of each user. Namely, the movement information management server 5, etc. can deliver advertising information or recommendations taking account of the common preference, to a group of users having a relatively strong connection and expected to act together with a higher probability, as a target. Consequently, the effect provided by delivery of the advertising information or recommendations can be further improved.

In this embodiment, the boarded vehicle picking unit 524 presumes that the user of each mobile terminal 4 is on board the vehicle 3, based on the vehicle movement history information and the terminal movement history information. Then, the user connection determining unit 526 assumes the users of two or more mobile terminals 4 presumed by the boarded vehicle picking unit 524 to be on board the same vehicle 3, as a user group having a strong connection.

Thus, the movement information management server 5 can grasp the users that are on board the vehicle 3 together, with higher certainty, by use of a high possibility of boarding of the user group assumed to have a strong connection on the same vehicle 3, for example.

In this embodiment, the boarded vehicle picking unit 524 uses a movement track (trip information) between start and stop of the vehicle 3, as vehicle movement history information.

Since vehicle occupants are unlikely to change, between the start and stop of the vehicle 3, the movement information management server 5 can assume a user group having a strong connection, with higher reliability.

In this embodiment, when the boarded vehicle picking unit 524 determines that the position information of the vehicle 3 at a certain point in time included in the vehicle movement history information coincides with the position information of the mobile terminal 4 at the same point in time included in the terminal movement history information, it presumes that the user of the mobile terminal 4 is on board the vehicle 3.

Thus, the movement information management server 5 can specifically assume boarding of the user of the mobile terminal 4 on the vehicle 3.

### Configuration of Advertising Management System

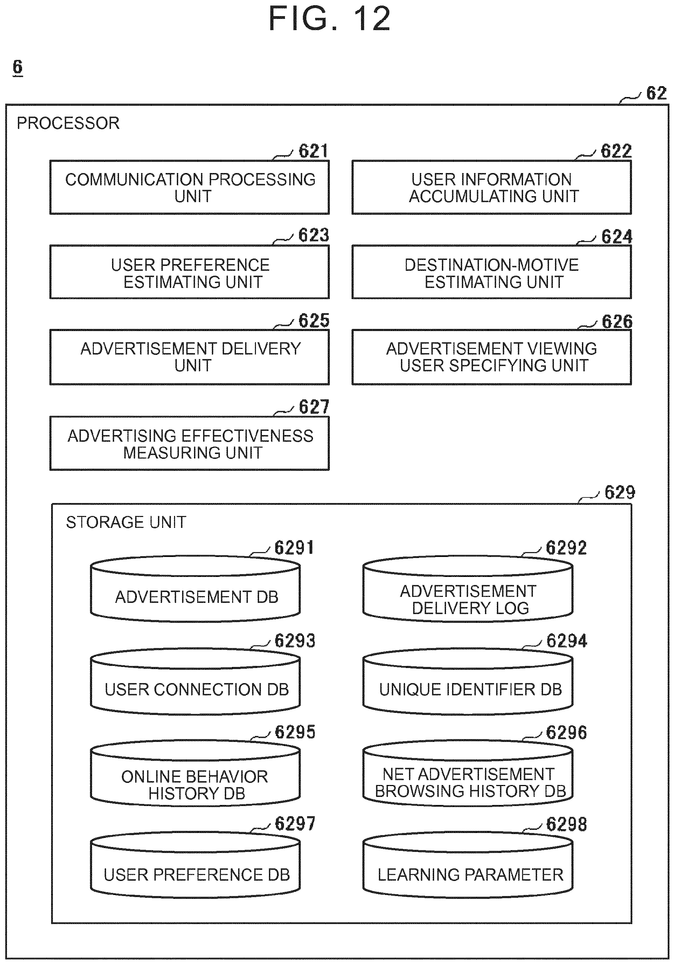

Next, the configuration of the advertising management system 2 according to this embodiment will be described, referring to FIG. 12, in addition to FIG. 1 to FIG. 4.

The functional block diagram of FIG. 12 schematically shows one example of the functional configuration of the advertising management server 6 (processor 62) according to this embodiment.

The advertising management system 2 includes a plurality of vehicles 3, a plurality of mobile terminals 4, the movement information management server 5, the advertising management server 6, and a digital signage terminal 7. The advertising management server 6 can communicate with the vehicles 3, mobile terminals 4, movement information management server 5, digital signage terminal 7, etc. The digital signage terminal 7 is communicably connected to the advertising management server 6, and is installed around a certain road, for example, on the roadside (including the case where it is set on a wall, or the like, of a building located on the roadside), or right above the road, for example. Namely, the advertising management system 2 includes the movement information management system 1, the advertising management server 6 that can communicate with the constituent elements of the movement information management system 1, and so forth. Although details will be described later, the advertising management system 2 performs delivery of advertisements to the vehicles 3, mobile terminals 4, and the digital signage terminal 7, and management concerning delivery of advertisements, such as evaluation of the effect of certain advertisements including the delivered advertisements. In the following, the vehicle 3 and the movement information management server 5 will not be repeatedly described.

The processor 42 of the mobile terminal 4 includes the unique identifier transmitting unit 426, as described above.

The unique identifier transmitting unit 426 issues a unique identifier of each of the mobile terminals 4, and transmits the unique identifier to the advertising management server 6, via the communication processing unit 421. The unique identifier may be a unique identifier (e.g., an advertisement ID of a smartphone) assigned in advance to each mobile terminal 4, or may be a hash ID, or the like, automatically generated using a known hash function, from a mail address, telephone number, etc. registered on the mobile terminal 4 of the user, for example.

When the mobile terminal 4 transmits a request for browsing a website on the Internet, to a target server, according to the user's operation on the mobile terminal 4, the unique identifier transmitting unit 426 transmits the issued unique identifier to the target server, via the communication processing unit 421, irrespective of a browser in use. When the target server is included in a so-called ad network centered around the advertising management server 6, data of the unique identifier is transmitted to the advertising management server 6, in a condition where the data is associated with data of browsing history. In this manner, the advertising management server 6 can grasp so-called on-line behavior history, such as websites browsed by the user of each of the mobile terminals 4. Browsers that can be used in each mobile terminal 4 include browsers in a plurality of applications installed, e.g., social networking service (SNS) applications, mail applications, and electronic commerce (EC) applications, as well as a default web browser. Since the unique identifier may be transmitted to the ad network side including the advertising management server 6, irrespective of the type of the browser, the Internet browsing history can be shared among a plurality of applications. In the case where the unique identifier is a hash ID generated based on the mail address, telephone number, etc. of the user of the mobile terminal 4, and two or more mobile terminals 4 used by the same user are included in the mobile terminals 4, the respective on-line behavior histories of the different mobile terminals 4 can be compiled as the behavior history of the same user.

The advertising management server 6 (one example of the information processing apparatus) performs delivery of advertisement to the vehicles 3, mobile terminals 4, and digital signage terminal 7, and evaluation of the effect of certain advertisement including the delivered advertisement. The advertising management server 6 includes a communication device 61, and the processor 62.

The communication device 61 conducts bidirectional communications with the vehicles 3, mobile terminals 4, movement information management server 5, digital signage terminal 7, etc., via communication networks NW2, NW4, NW5, NW6, under control of the processor 62 (more specifically, a communication processing unit 621).

The processor 62 performs various control operations in the advertising management server 6. The functions of the processor 62 may be implemented by any hardware, software, or a combination thereof. For example, the processor 62 consists mainly of one server computer or two or more server computers each including CPU, RAM, ROM, auxiliary storage device, I/O, etc. For example, the processor 62 includes the communication processing unit 621, a user information accumulating unit 622, a user preference estimating unit 623, a destination-motive estimating unit 624, an advertisement delivery unit 625, an advertisement viewing user specifying unit 626, and an advertising effectiveness measuring unit 627, as functional units implemented by executing one or more programs stored in the ROM, auxiliary storage device, or the like, on the CPU, for example. The processor 62 also includes a storage unit 629 as a storage area defined in the auxiliary storage device, or an external storage device connected to the server computer, for example. The storage unit 629 includes an advertisement database (DB) 6291, advertisement delivery log 6292, user connection database (DB) 6293, unique identifier database (DB) 6294, online behavior history database (DB) 6295, Internet advertisement browsing history database (DB) 6296, user preference database (DB) 6297, and learning parameters 6298.

The communication processing unit 621 controls the communication device 61, to transmit and receive various signals (such as information signals, and control signals) to and from the vehicles 3, mobile terminals 4, movement information management server 5, digital signage terminal 7, and so forth.

The user information accumulating unit 622 collects various kinds of information relating to the users of a plurality of mobile terminals 4, from the mobile terminals 4, movement information management server 5, and other serves (e.g., web servers included in the above-mentioned ad network), and accumulates the information in the storage unit 629.

For example, the user information accumulating unit 622 stores information (connection information) concerning the degree of connection between the users of the mobile terminals 4, in the storage unit 629, and creates the user connection DB 6293. The communication processing unit 621 receives the connection information from the movement information management server 5. Namely, the user connection DB 6293 has the same content as the user connection DB 5296 of the movement information management server 5. Thus, the advertising management server 6 (processor 62) can deliver advertisement, for example, based on the degree of connection between the users of the mobile terminals 4, as will be described later.

Also, for example, the user information accumulating unit 622 stores the unique identifiers received by the communication processing unit 621 from the respective mobile terminals 4, in the storage unit 629, such that the unique identifiers are associated with the respective mobile terminals 4 from which they are transmitted, and creates the unique identifier DB 6294. Thus, the advertising management server 6 (processing unit 62) can grasp the correspondence relationship between the unique identifiers and the mobile terminals 4.

Also, for example, the user information accumulating unit 622 stores information browsing history (Internet information browsing history) associated with the unique identifier, in the storage unit 629, such that the information browsing history is associated with the corresponding mobile terminal 4, based on the unique identifier DB 6294, and creates the online behavior history DB 6295. The communication processing unit 621 receives the information browsing history, from a plurality of web servers in the ad network having the advertising management server 6 as its center, via the Internet. Thus, the processor 62 can grasp characteristics (preference characteristics) concerning preference or taste, such as interests, concerns, etc. of each user, based on the online behavior history of the user of each of the mobile terminals 4, as will be described later.

In this connection, the user information accumulating unit 622 may create the online behavior history DB 6295 on the users of the mobile terminals 4, by using a known method utilizing cookie (HTTP cookie), as well as the unique identifiers.

Also, for example, the user information accumulating unit 622 retrieves information (Internet advertisement browsing information) concerning browsing of advertisement, from the Internet information browsing history stored in the online behavior history DB 6295, and stores the information in the storage unit 629 while associating it with each of the mobile terminals 4, so as to create the Internet advertisement browsing history DB 6296. Thus, the processor 62 can specify users who browsed a certain online advertisement, as will be described later.

The user preference estimating unit 623 estimates characteristics (preference characteristics) concerning the preference or taste of the user of each of the mobile terminals 4, based on the online behavior history DB 6295. When it can determined that two or more mobile terminals 4 of the same user are included in the mobile terminals 4, for example, when two or more different mobile terminals 4 have the same unique identifier (hash ID), as described above, the user preference estimating unit 623 aggregates the online behavior histories of the two or more mobile terminals 4, and estimates the preference characteristics of the same user of the two or more mobile terminals 4. For example, the user preference estimating unit 623 guesses what preference category the user of the mobile terminal 4 is interested in or concerned with, out of a plurality of pre-defined preference categories, and estimates the degree of the interest or concern of the user. More specifically, the user preference estimating unit 623 divides the contents in the online behavior history DB 6295 into meaningful letter strings of the minimum unit, through a morphological analysis, for example, and applies a technology, such as Term Frequency-Inverse Document Frequency (TF-IDF), used in text mining, so as to pick out characteristic words representing characteristics of each content. Then, the user preference estimating unit 623 may pick out a preference category or categories which the user of each of the mobile terminals 4 is presumed to be interested in or concerned with, by calculating the relevance (matching ratio) to a plurality of preference categories by a known method, based on the characteristic words thus picked out. The user preference estimating unit 623 stores the information (preference information) concerning the preference characteristics of the user of each mobile terminal 4, for example, a preference category picked out for each user of the mobile terminals 4, in the storage unit 629, such that the information is associated with the identification information (terminal ID or user ID) of the corresponding mobile terminal 4 or its user, to thus create the user preference DB 6297.

When it can be determined that two or more mobile terminals 4 of the same user are included in the mobile terminals 4, the user preference estimating unit 623 may store data that associates the identification information of the two or more mobile terminals 4 or their user, with the preference information of the user, in the user preference DB 6297.

When the user of the mobile terminal 4 is on board the vehicle 3, the destination-motive estimating unit 624 estimates the destination of the vehicle 3 and the motive for action (motive for heading for the destination), based on the online behavior history DB 6295. In this case, the destination-motive estimating unit 624 makes an inquiry to the movement information management server 5, via the communication processing unit 621. Then, the movement information management server 5 replies to the advertising management server 6 with a vehicle 3 and a mobile terminal 4 that are in an on-board associated condition, in response to the inquiry, so that the destination-motive estimating unit 624 can grasp the user of the mobile terminal 4 who is on board the vehicle 3, out of the users of the mobile terminals 4, based on the content of the reply. The information which the user of the mobile terminal 4 obtains online, via a social networking service (SNS), for example, may include information that leads to the motive for the action (which will be called "next action") that is supposed to be performed by the user. Thus, the information which the user of the mobile terminal 4 obtains online may have an influence on the next action of the user of the mobile terminal 4, more specifically, selection of a destination, such as a place or facility the user will visit. Namely, some relationship (correlation, relative tendency, and causal relationship) can be considered to exist between the online behavior history of the user of the mobile terminal 4, and the visit history of the user (e.g., POI or area visited by the user). Thus, as offline processing at a stage prior to estimation of the destination or motive, the destination-motive estimating unit 624 analyzes the relationship between the usage history of the user of the mobile terminal 4 and the place visited (destination), for each area or road link on which the vehicle 3 is placed, for example, based on the online behavior history of the user of each of the mobile terminals 4, and the visit history of the user, and sequentially learns the results of the analysis. More specifically, the destination-motive estimating unit 624 may estimate the destination and the motive, based on the result of learning (learning parameter 6298) that is sequentially updated, using the online behavior history of the user of the particular mobile terminal 4, and the area or road link (link ID) on which the vehicle 3 is currently located, as input data. Also, when two or more users of the mobile terminals 4 are on board the vehicle 3, the destination-motive estimating unit 624 may estimate a highly common destination or motive, from the destinations or motives estimated from the online behavior histories of the two or more users of the mobile terminals 4.

The advertisement delivery unit 625 performs operation to deliver advertisement, to a plurality of vehicles 3, a plurality of mobile terminals 4, one or more digital signage terminals 7, and so forth, as targets. Data (advertisement data) of advertisement to be delivered, which is received by the advertising management server 6, is stored in the advertisement DB 6291. Some kinds of information are set in advance in each advertisement to be delivered, which is received by the advertising management server 6. These kinds of information may include information (guidance destination information) concerning a guidance destination (such as a physical shop at which the goods, etc. as a subject of the advertisement are sold) to which the user is led by the advertisement, characteristic information (user characteristic target information) of target users as a target of the advertisement, information (location target information) concerning the location (e.g., a POI at which many target users gather, area close to the guidance destination, or road link which the user is highly likely to pass when heading for the guidance destination), and so forth. These kinds of information are stored in the advertisement DB 6291, such that they are associated with the advertisement data. The advertisement delivery unit 625 may determine delivery destinations of the advertisement to be delivered, from among a plurality of vehicles 3, a plurality of mobile terminals 4, one or more digital signage terminals 7, etc., based on the guidance destination information, user characteristic target information, location target information, etc., and transmit the data of the advertisement to the delivery destinations, via the communication processing unit 621. More specifically, the advertisement delivery unit 625 may determine delivery targets, from among a plurality of vehicles 3, a plurality of mobile terminals 4, and one or more digital signage terminals 7, in view of the relationship between the position information of each of the vehicles 3, mobile terminals 4, and one or more digital signage terminals 7, and the position information corresponding to the guidance destination. Also, the advertisement delivery unit 625 may pick out users matching the user characteristic target information, from among the users of the mobile terminals 4, based on the user preference DB 6297, and select the mobile terminals 4 of the users thus picked out and the vehicles 3 used by the users, as delivery targets of the advertisement. Also, the advertisement delivery unit 625 may select vehicles 3, mobile terminals 4, and digital signage terminals 7 that match the location target information, as delivery targets, based on the position information of each of the vehicles 3, mobile terminals 4, and digital signage terminals 7.

The advertisement delivery unit 625 may deliver advertisement to the vehicles 3, mobile terminals 4, and the digital signage terminal 7 installed around a road which the vehicle 3 boarded by the users of two or more mobile terminals 4 is passing, based on the user connection DB 6293. In this case, the advertisement delivery unit 625 makes an inquiry to the movement information management server 5, via the communication processing unit 621, so that it can grasp vehicles 3 that are boarded by the users of the mobile terminals 4, or vehicles 3 that are boarded by the users of the mobile terminals 4, and are passing a road adjacent to the digital signage terminal 7. More specifically, the movement information management server 5 specifies vehicles 3 that are associated in terms of boarding with any of the mobile terminals 4, in response to the inquiry, so that it can specify the vehicle 3 that is being boarded by the user of the mobile terminal 4. Also, the movement information management server 5 can specify the vehicle 3 located on the road link adjacent to the digital signage terminal 7, from among the vehicles 3 that are associated in terms of boarding with any of the mobile terminals 4. Then, the movement information management server 5 sends a reply to the inquiry, back to the advertising management server 6. For example, the advertisement delivery unit 625 may deliver an advertisement that matches common preference characteristics, namely, belongs to a common preference category, to the mobile terminals 4 of two or more users having a relatively strong connection (a relatively high level of connection), out of the users of the mobile terminals 4. As a result, the users, who have a relatively strong connection and are likely to influence each other, share the same advertisement browsed, thereby to be made more likely to become interested in the goods or service as a subject of the advertisement, resulting in improvement of the effect provided by the advertisement delivery. Also, for example, when two or more users having a relatively strong connection are on board the vehicle 3, the advertisement delivery unit 625 may deliver an advertisement that matches common preference characteristics, namely, belongs to a common preference category, to the mobile terminals 4 of the two or more users. Also, for example, when two or more users having a relatively strong connection are on board the vehicle 3, and the vehicle 3 is passing a road adjacent to a digital signage terminal 7, the advertisement delivery unit 625 may deliver an advertisement that matches preference characteristics common to the two or more users, namely, belongs to a common preference category, to the digital signage terminal 7. Thus, since the two or more users are traveling together on the vehicle 3, they are likely to share information of the common preference category, and are made more likely to become interested in or concerned with the goods or service as a subject of the advertisement, resulting in further improvement of the effect provided by advertisement delivery.

Where the destination-motive estimating unit 624 estimates a destination which the user of a certain mobile terminal 4 who is on board a certain vehicle 3 heads for during traveling, and a motive of the action, the advertisement delivery unit 625 may deliver advertisement to the vehicle 3, the mobile terminal 4, and the digital signage terminal 7 installed around a road the vehicle 3 is passing, based on at least one of the destination and the motive of the action. For example, the advertisement delivery unit 625 may deliver an advertisement concerning a facility present in the vicinity of the estimated destination, or advertisement of the same or similar category as that of the destination or the motive for action, to at least one of the vehicle 3, the mobile terminal 4, and the digital signage terminal 7 installed around the road the vehicle 3 is passing. The advertisement delivery unit 625 may also deliver information about recommended facilities in the vicinity of the destination, and suggested information (recommendations) for recommending or introducing goods or services of the same or similar category as the destination or the motive for action, as well as the information concerning advertisement, to at least one of the vehicle 3, the mobile terminal 4, and the digital signage terminal 7 installed around the road the vehicle 3 is passing. Thus, the advertisement delivery unit 625 can provide advertisement, etc. to the user of the mobile terminal 4 who is on board the vehicle 3 and traveling, in accordance with the next action of the user, resulting in improvement of the effect provided by the advertisement delivery. In the case where two or more users of the mobile terminals 4 are on board the vehicle 3, the destination-motive estimating unit 624 estimates the destination and the motive for action, in view of common preference characteristics, etc. of the two or more users, as described above. When two or more users of the mobile terminals 4 are on board the vehicle 3 together, the common preference of the two or more users is supposed to have an influence on the next action or behavior. In this situation, more appropriate destination and motive for action are estimated, and accordingly, more appropriate advertisement, etc. can be presented to the users, so that the effect due to the advertisement delivery can be further improved.

When the users of the mobile terminals 4 are on board the vehicles 3, the advertisement delivery unit 625 may deliver advertisement to each vehicle 3, each mobile terminal 4, and the digital signage terminal 7 installed around the road the vehicle 3 is passing, depending on whether one user, or two or more users, is/are on board the vehicle 3. In this case, the advertisement delivery unit 625 makes an inquiry to the movement information management server 5 via the communication processing unit 621, so as to grasp the users of the mobile terminals 4 who are being on board the vehicles 3, and also specify the users who are being on board the same vehicle 3, from the above users. For example, when only one user of the mobile terminal 4 is on board the vehicle 3, the advertisement delivery unit 625 delivers an advertisement suited for the preference characteristics of the user, to at least one of the vehicle 3, the mobile terminal 4 of the user, and the digital signage terminal 7 adjacent to the road the vehicle 3 is passing. On the other hand, when two or more users of the mobile terminals 4 are on board the vehicle 3, the advertisement delivery unit 625 takes account of the preference characteristics of the two or more users on board together, and delivers an advertisement relating to the common preference characteristics (preference category), for example, to at least one of the vehicle 3, the mobile terminals 4 of the users, and the digital signage terminal 7 adjacent to the road the vehicle 3 is passing. When two or more users of the mobile terminals 4 are on board the vehicle 3 together, they are highly likely to be motivated by the common preference characteristics, to head for the destination, namely, they are highly likely to be highly sensitive to information concerning the common preference characteristics. It is thus possible to improve the effect of advertisement delivery, by delivering advertisement in accordance with the common preference characteristics.

The advertisement viewing user specifying unit 626 specifies the users who viewed a certain advertisement, from among the users of a plurality of mobile terminals 4. For example, when the advertisement concerned is to be delivered to at least a part of the mobile terminals 4, the advertisement viewing user specifying unit 626 can specify the users of the mobile terminals 4 selected as a target of delivery of the advertisement, as the users who viewed the advertisement, based on an advertisement delivery log 6292 as delivery history. Also, for example, when the advertisement concerned is to be delivered to at least a part of the vehicles 3, the advertisement viewing user specifying unit 626 can specify the users of the mobile terminals 4 who were on board the vehicles 3 selected as a target of delivery of the advertisement, as the users who viewed the advertisement, based on the advertisement delivery log 6292 as delivery history. In this case, the advertisement viewing user specifying unit 626 makes an inquiry to the movement information management server 5 via the communication processing unit 621, so as to specify the users of the mobile terminals 4 who were on board the vehicles 3 as the delivery target, in a time slot in which the advertisement was delivered. Also, for example, when the advertisement concerned is to be delivered to the digital signage terminal 7, the advertisement viewing user specifying unit 626 specifies the users of the mobile terminals 4 who were on board the vehicles 3 that passed the road adjacent to the installation position of the digital signage terminal 7, within a display period of the advertisement, as the users who viewed the advertisement. In this case, the advertisement viewing user specifying unit 626 makes an inquiry to the movement information management server 5 via the communication processing unit 621, so as to grasp the users of the mobile terminals 4 who were on board the vehicles 3 that passed the above road within the display period of the advertisement. More specifically, the movement information management server 5 retrieves vehicle movement tracking information from the tracking information DB 5297, in response to the inquiry from the advertising management server 6. The vehicle movement tracking information includes clock time information included in the display period of the advertisement, and the information (link ID) concerning the road link corresponding to the road adjacent to the installation position of the digital signage terminal 7 as a target. Then, the movement information management server 5 determines the users of the mobile terminals 4 corresponding to the retrieved vehicle movement tracking information, as the users who viewed the advertisement, and transmits information concerning their mobile terminals 4, back to the advertising management server 6. Also, when the advertisement concerned is in the form of a banner advertisement displayed on a certain website, for example, the advertisement viewing user specifying unit 626 can specify users of the mobile terminals 4 who viewed the banner advertisement, based on the Internet advertisement browsing history DB 6296. Also, for example, the advertisement viewing user specifying unit 626 may specify the users of the mobile terminals 4 who viewed offline advertisement, such as a billboard except digital signage, as well as the users who viewed advertisement delivered online, in the same manner as in the case of advertisement delivered to the digital signage terminal 7.

The advertising effectiveness measuring unit 627 (one example of the track record specifying unit) measures the effectiveness (conversion) of advertisement delivered by the advertisement delivery unit 625. More specifically, the advertising effectiveness measuring unit 627 specifies the users of the mobile terminals 4 who actually visited a physical shop at which the goods or services as a subject of the advertisement are sold or provided, from among the users of the mobile terminals 4 specified by the advertisement viewing user specifying unit 626. Also, the advertising effectiveness measuring unit 627 specifies the users of the mobile terminals 4 who actually purchased the goods or services as a subject of the advertisement at an online shop where the goods or services are sold or provided, from among the users of the mobile terminals 4 specified by the advertisement viewing user specifying unit 626. In this manner, with respect to all the users who viewed the advertisement, the advertising effectiveness measuring unit 627 can measure conversion (store visit conversion, purchase conversion), namely, the number or percentage of the users who actually visited the physical shop, or the number or percentage of the users who purchased the product or service at the online shop.

For example, the advertising effectiveness measuring unit 627 specifies the users of the mobile terminals 4 who viewed a certain advertisement, and then actually purchased the goods or services as a subject of the advertisement, on a website of an online shop where the goods or serves are sold or provided, from among the users of the mobile terminals 4 specified by the advertisement viewing user specifying unit 626, based on the online behavior history DB 6295. More specifically, since the online behavior history DB 6295 includes information about websites browsed on the mobile terminals 4, clock time of the browsing, etc., the advertising effectiveness measuring unit 627 specifies each user of the mobile terminal 4, referring to the online behavior history after a point in time at which the user viewed the advertisement. At this time, the advertising effectiveness measuring unit 627 can estimate the time at which the user of the mobile terminal 4 viewed the advertisement concerned, from points in time at which the advertisement was delivered to the vehicle 3, mobile terminal 4, and digital signage terminal 7, and a point in time at which the vehicle 3 boarded by the user of the mobile terminal 4 passed a road around which a billboard including the digital signage terminal 7 is installed, for example.

Also, for example, the advertising effectiveness measuring unit 627 makes an inquiry to the movement information management server 5 via the communication processing unit 621, so as to specify the users of the mobile terminals 4 who actually visited a physical shop where the goods or services as a subject of an advertisement are sold or provided, after viewing the advertisement, from among the users of the mobile terminals 4 specified by the advertisement viewing user specifying unit 626. More specifically, as described above, the tracking information DB 5297 of the movement information management server 5 includes boarding-traveling tracking information about the time when the user of each mobile terminal 4 gets on board the vehicle 3 and travels. Then, the boarding-traveling tracking information includes candidate POI information corresponding to the departure point and destination, and the result of determination as to whether the vehicle 3 was parked in a parking space of the candidate POI. Thus, the movement information management server 5 searches the tracking information DB 5297, for the boarding-traveling tracking information after the clock time when the user of the mobile terminal 4 specified by the advertisement viewing user specifying unit 626 viewed the advertisement concerned, in response to the inquiry from the advertising management server 6. Then, the movement information management server 5 retrieves the boarding-movement tracking information including the candidate POI corresponding to the physical shop at which the goods, etc. as a subject of the advertisement are sold, and including the result of determination that the vehicle 3 was parked in the parking space of the candidate POI. In this manner, the movement information management server 5 can determine that the user of the mobile terminal 4 corresponding to the retrieved boarding-traveling tracking information visited the physical shop. Also, when the movement information management server 5 determines that the user of the mobile terminal 4 who viewed the advertisement visited the physical shop, it checks if another mobile terminal 4 different from the mobile terminal 4 concerned, or another user different from the user concerned, is associated with the boarding-traveling tracking information. Then, when another mobile terminal 4 or another user is associated with the boarding-traveling tracking information, the movement information management server 5 can determine that the user of the other mobile terminal 4 or the other user was on board together with the above user, and visited the physical shop. Then, the movement information management server 5 sends a reply to the inquiry back to the advertising management server 6, so that the advertising effectiveness measuring unit 627 can specify the users of the mobile terminals 4 who actually visited the physical shop concerned, after viewing the advertisement, from among the users of the mobile terminals 4 who viewed the advertisement concerned. In addition, the advertising effectiveness measuring unit 627 can determine that another user (user who did not view the advertisement) who was on board the same vehicle 3 along with the user of the mobile terminal 4 who viewed the advertisement visited the physical shop. This makes it possible to measure a ripple effect of the advertisement on other users who did not actually viewed the advertisement, as will be described later.

### Details of Operation of Advertisement Management System

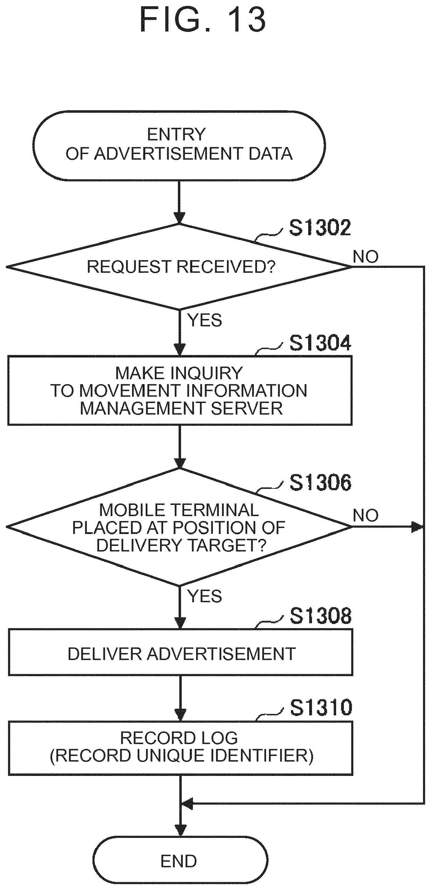

Referring next to FIG. 13 to FIG. 15, operation of the advertising management system 2 will be described in detail.

The flowchart of FIG. 13 schematically illustrates one example of an advertisement delivery process performed by the processor 62 of the advertising management server 6. More specifically, FIG. 13 shows a specific example of the advertisement delivery process in the case (the case of requested delivery) where an advertisement is delivered to a plurality of mobile terminals 4 as a candidate of a delivery target of the advertisement, in response to a request for advertisement delivery transmitted from a certain application installed on each mobile terminal 4 to the advertising management server 6 via the communication processing unit 421. The process according to this flowchart is started when the advertisement is entered into the advertising management server 6, for example, and is repeatedly carried out at given time intervals, over a pre-defined delivery period of the advertisement.

In step S1302, the advertisement delivery unit 625 determines whether the communication processing unit 621 has received a request for advertisement delivery from any of the mobile terminals 4. When the communication processing unit 621 receives a request for advertisement delivery from a certain application installed on the mobile terminal 4, the advertisement delivery unit 625 proceeds to step S1304. Otherwise, the current cycle of the process ends.

In step S1304, the advertisement delivery unit 625 makes an inquiry as to whether the mobile terminal 4 from which the request for advertisement delivery was transmitted is placed at a location to which the advertisement is to be delivered, namely, whether the mobile terminal 4 is placed at a position that matches guidance destination information or location target information, to the movement information management server 5, via the communication processing unit 621.

In step S1306, the advertisement delivery unit 625 determines whether the mobile terminal 4 from which the request for advertisement delivery was transmitted is placed at the position matching the guidance destination information or location target information, based on a reply received by the communication processing unit 621 from the movement information management server 5. When the mobile terminal 4 is placed at the position matching the guidance destination information or location target information, the advertisement delivery unit 625 proceeds to step S1308. Otherwise, the current cycle of the process ends.

The advertisement delivery unit 625 may further determine whether the user of the mobile terminal 4 matches the user characteristic target information of the advertisement, as described above, and may deliver the advertisement, only to the users matching the user characteristic target information. Also, as described above, the advertisement delivery unit 625 may determine whether the advertisement is to be delivered to the user of the mobile terminal 4, in view of other information, such as the user connection DB 6293.

In step S1308, the advertisement delivery unit 625 delivers the advertisement to the mobile terminal 4, via the communication processing unit 621.

In step S1310, the advertisement delivery unit 625 records a log to the effect that the advertisement was delivered to the mobile terminal 4 and viewed by its user, in the advertisement delivery log 6292. More specifically, the advertisement delivery unit 625 records the unique identifier of the mobile terminal 4, and finishes the current cycle of the process. Thus, the advertisement viewing user specifying unit 626 can specify the users of the mobile terminals 4 who viewed the advertisement, by referring to the advertisement delivery log 6292.

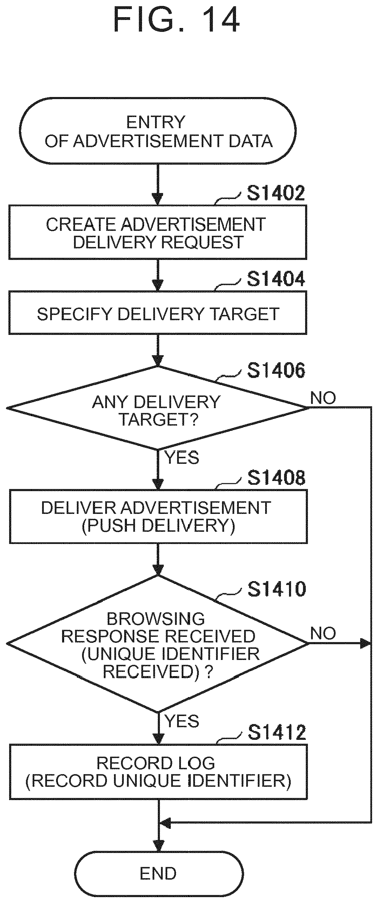

The flowchart of FIG. 14 schematically illustrates another example of the advertisement delivery process performed by the processor 62 of the advertising management server 6. More specifically, FIG. 14 shows a specific example of the advertisement delivery process in the case where an advertisement is delivered to a plurality of mobile terminals 4 as a candidate of a delivery target of the advertisement, such that the advertisement is pushed to a certain application installed on each mobile terminal 4. The process according to this flowchart is executed when the advertisement is entered into the advertising management server 6, for example, and is executed again, in accordance with a re-delivery schedule, if re-delivery is set.

In step S1402, the advertisement delivery unit 625 creates an advertisement delivery request including advertisement data to be delivered.

In step S1404, the advertisement delivery unit 625 specifies a target of push advertising. For example, the advertisement delivery unit 625 may specify mobile terminals 4 as a delivery target, based on a pre-defined push advertising list, or the like. The advertisement delivery unit 625 may also further select users who match at least one of the guidance destination information of the advertisement, user characteristic target information, and location target information, as described above, from the users of the mobile terminals 4 in the pre-defined push advertising list. The advertisement delivery unit 625 may also further select users as a target of delivery, in view of other information, such as the user connection DB 6293, from the users of the mobile terminals 4 in the pre-defined push advertising list, as described above.

In step S1406, the advertisement delivery unit 625 determines whether there is any mobile terminal 4 to which the advertisement is to be delivered, based on operation of step S1404. When there is a mobile terminal or terminals 4 to which the advertisement is to be delivered, the advertisement delivery unit 625 proceeds to step S1408. Otherwise, the current cycle of the routine ends.

In step S1408, the advertisement delivery unit 625 delivers the advertisement to the mobile terminal(s) 4 specified as the target of delivery, via the communication processing unit 621.

In step S1410, the advertisement delivery unit 625 determines, after delivering the advertisement, whether the communication processing unit 621 has received a browsing response including the unique identifier, from each mobile terminal 4 to which the advertisement was delivered. When the communication processing unit 621 received the browsing response from the mobile terminal 4, the advertisement delivery unit 625 proceeds to step S1412. Otherwise, the current cycle of the process ends.

In step S1412, the advertisement delivery unit 625 records a log to the effect that the advertisement was delivered to and viewed on the mobile terminal 4 corresponding to the browsing response received by the communication processing unit 621. More specifically, the advertisement delivery unit 625 records the unique identifier included in the browsing response received, and finishes the current cycle of the process. Thus, the advertisement viewing user specifying unit 626 can specify the users of the mobile terminals 4 who viewed the advertisement, by referring to the advertisement delivery log 6292.

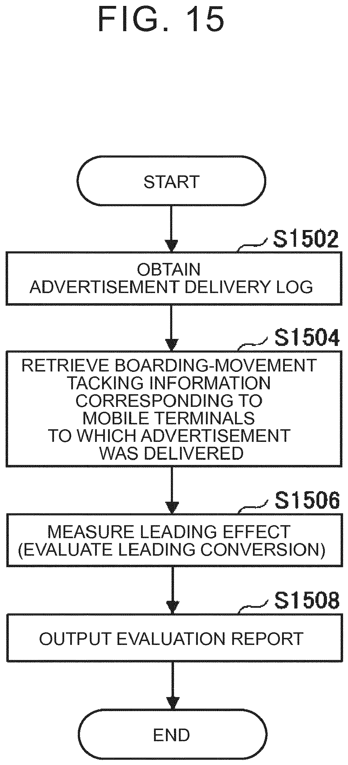

The flowchart of FIG. 15 schematically illustrates one example of a process (leading effect measuring process) of measuring an effect to lead people to a destination of advertisement, which is performed by the processor 62 of the advertising management server 6. More specifically, FIG. 15 shows a specific example of the leading effect measuring process to measure the leading effect (leading conversion) of advertisement delivered to the mobile terminals 4 through the advertisement delivery process of FIG. 13, FIG. 14, for leading their users to a physical shop. The process according to this flowchart is executed at given times, after the delivery period of an advertisement expires, for example.

In step S1502, the advertisement viewing user specifying unit 626 obtains the advertisement delivery log 6292 from the storage unit 629. Thus, the advertisement viewing user specifying unit 626 can retrieve the unique identifiers of the mobile terminals 4 of the users who viewed an advertisement, and specify the users of the mobile terminals 4 who viewed the advertisement.

In step S1504, the advertising effectiveness measuring unit 627 makes an inquiry about boarding-movement tracking information corresponding to the mobile terminals 4 of the users who viewed the advertisement, to the movement information management server 5. The advertisement was delivered to the mobile terminals 4, and the users are specified by the advertisement viewing user specifying unit 626. As a result, the movement information management server 5 can specify the users of the mobile terminals 4 who actually visited a physical shop where the goods or services advertised are sold or provided, after viewing the advertisement, in response to the inquiry.

In step S1506, the advertising effectiveness measuring unit 627 measures the leading effect of the advertisement, namely, evaluates leading conversion, based on a reply to the inquiry transmitted from the movement information management server 5 to the communication processing unit 621. For example, the advertising effectiveness measuring unit 627 may calculate the ratio of the number of the users who viewed the advertisement and visited the physical shop, to the number of the users of the mobile terminals 4 who viewed the advertisement. Also, for example, the advertising effectiveness measuring unit 627 may evaluate a ripple effect of the advertisement, based on the actual visit of another user who did not view the advertisement, to the shop, along with the user who viewed the advertisement, as described above.

In step S1508, the advertising effectiveness measuring unit 627 outputs an evaluation report concerning the conversion evaluation, in a certain form, and finishes the current cycle of this process.

### Operation of Advertising Management System

Thus, in this embodiment, the advertisement viewing user specifying unit 626 specifies the users of the mobile terminals 4 who viewed a certain advertisement, from the users of a plurality of mobile terminals 4. Then, with respect to each user who viewed the advertisement, the advertising effectiveness measuring unit 627 determines the actual visit of the user to a physical shop where the goods or services advertised are sold or provided after viewing the advertisement, based on the terminal movement history information of the mobile terminal 4 of the user specified by the advertisement viewing user specifying unit 626, and the vehicle movement history information of the vehicle 3 having a possibility of being boarded by the user and specified by the vehicle-for-use specifying unit 525. More specifically, the advertising effectiveness measuring unit 627 makes an inquiry to the movement information management server 5, as described above, so as to determine the actual visit of the user to the physical shop after viewing the advertisement, by using the tracking information DB 5297 comprising vehicle movement tracking information obtained when the user of the mobile terminal 4 who viewed the advertisement is on board the vehicle 3 and traveling.

Thus, the advertising management server 6 can determine whether the user of the mobile terminal 4 who viewed the advertisement got on board the vehicle 3, after viewing the advertisement, and visited the physical shop where the goods advertised, etc., are sold, based on the terminal movement history information and the vehicle movement history information. Accordingly, the advertising management server 6 can measure the leading effect (leading conversion) of an Internet advertisement, or an advertisement, such as a billboard or a digital signage, around the road, which leads its viewers to the physical shop, based on the actual visit to the physical shop.

Also, in this embodiment, when the advertising effectiveness measuring unit 627 determines that one user who viewed an advertisement and is specified by the advertisement viewing user specifying unit 626 got on board a vehicle 3 having a possibility of being boarded by the one user, and visited a physical shop, based on the terminal movement history information of the mobile terminal 4 of the one user, and the vehicle movement history information of the vehicle 3 specified by the vehicle-for-use specifying unit 525, the advertising effectiveness measuring unit 627 determines whether another user was on board the vehicle 3 when the above-indicated one user visited the physical shop, based on the terminal movement history information of the other user using the vehicle 3 specified by the vehicle-for-use specifying unit 525. More specifically, when the advertising effectiveness measuring unit 627 determines that one user of the mobile terminal 4 who viewed the advertisement got on board the vehicle 3 and visited the physical shop after viewing the advertisement, it makes an inquiry to the movement information management server 5, so as to determine whether another user of the mobile terminal 4 using the vehicle 3 was on board the vehicle 3 together with the above one user, and visited the physical shop, by using the tracking information DB 5297, as described above.

In this manner, when the advertising management server 6 determines that the user who viewed the advertisement got on board the vehicle 3 and visited the shop, it can also determine whether another user using the vehicle 3 was also on board the vehicle 3. Accordingly, the advertising management server 6 can measure the ripple effect of the advertisement to other users who did not actually view the advertisement, as well as the leading effect of the advertisement.

In this embodiment, the advertisement delivery unit 625 delivers advertisement to at least a part of the mobile terminals 4. Then, the advertisement viewing user specifying unit 626 specifies the users who viewed the advertisement, based on the delivery history (advertisement delivery log 6292) of the advertisement delivered to the mobile terminal 4 by the advertisement delivery unit 625.

Thus, the advertising management server 6 can measure the leading effect of advertisement in applications delivered to the mobile terminals 4 by the advertisement delivery unit 625, for leading the users to the physical shop.

In this embodiment, the advertisement viewing user specifying unit 626 specifies the users of the mobile terminals 4 who viewed advertisement (Internet advertisement) delivered via the Internet, based on the Internet browsing history (online behavior history DB 6295) of each of the mobile terminals 4.

Thus, the advertising management server 6 can specify the users of the mobile terminals 4 who viewed a certain Internet advertisement, from the Internet browsing history of each of the mobile terminals 4.

In this embodiment, the advertisement viewing user specifying unit 626 specifies the users of the mobile terminals 4 who viewed an advertisement (a billboard including an advertisement displayed on the digital signage terminal 7) installed around a certain road, based on the terminal movement history information of each of the mobile terminals 4, and the vehicle movement history information of the vehicle 3 having a possibility of being boarded by the user of the mobile terminal 4 and specified by the vehicle-for-use specifying unit 525. More specifically, the advertisement viewing user specifying unit 626 makes an inquiry to the movement information management server 5, so as to specify the users of the mobile terminals 4 who got on board the vehicle 3 and traveled on the road adjacent to the advertisement, in the display period of the advertisement, by using the tracking information DB 5297.

Thus, the advertising management server 6 can specify the users of the mobile terminals 4 who viewed an advertisement, such as a billboard or a digital signage, installed around a certain road, by determining whether the user of each mobile terminal 4 got on board the vehicle 3, and the vehicle 3 passed the road adjacent to the advertisement, from the terminal movement history information of the mobile terminal 4, and the vehicle movement tracking information based on the vehicle movement history information of the vehicle 3 having a possibility of being boarded by the user of the mobile terminal 4.

In this embodiment, the advertising effectiveness measuring unit 627 determines that the user of the mobile terminal 4 who viewed an advertisement and is specified by the advertisement viewing user specifying unit 626 visited the physical shop, when it determines that the vehicle 3 boarded by the user of the mobile terminal 4 was parked within a range of a parking space of the physical shop, or when it determines that the vehicle 3 boarded by the user steered away from a road at around a gateway of the parking space of the physical shop, or when it determine that the vehicle 3 boarded by the user returned onto the road from the outside thereof at around the gateway of the parking space of the physical shop. More specifically, the user boarding-movement tracking unit 528 determines that the user of the mobile terminal 4 parked the vehicle 3 in the parking space of a candidate POI, when it determines that the vehicle 3 boarded by the user of the mobile terminal 4 was parked within the range of the parking space of the candidate POI, or it determines that the vehicle 3 boarded by the user steered away from the road, to the outside of the road, at around the gateway of the parking space of the candidate POI, or when it determines that the vehicle 3 boarded by the user returned onto the road from the outside thereof at around the gateway of the parking space of the candidate POI. Then, the user boarding-movement tracking unit 528 stores candidate POI information, and information to the effect that the vehicle 3 was parked in the parking space of the candidate POI, in the tracking information DB 5298, as the vehicle movement tracking information. Then, the advertising effectiveness measuring unit 627 makes an inquiry to the movement information management server 5, so as to retrieve the vehicle movement tracking information including the physical shop as the candidate POI information, and the result of determination that the vehicle 3 was parked in the parking space of the candidate POI, from the vehicle movement tracking information of the user of the mobile terminal 4 who viewed the advertisement, based on the tracking information DB 5298.

Thus, the advertising effectiveness measuring unit 627 can determine whether the user of the mobile terminal 4 who viewed the advertisement got on board the vehicle 3 and visited the physical shop, by checking a specific situation, such as the case where the vehicle 3 boarded by the user of the mobile terminal 4 was parked in the parking space of the physical shop.

In this embodiment, the advertisement viewing user specifying unit 626 specifies the users who viewed a certain advertisement (a billboard including an advertisement displayed on the digital signage terminal 7) installed around a certain road, from among the users of a plurality of mobile terminals 4, based on the terminal movement history information of the user of each of the mobile terminals 4, and the vehicle movement history information of the vehicle 3 having a possibility of being boarded by the user of the mobile terminal 4. Then, the advertising effectiveness measuring unit 627 determines the actual visit of the user to a physical shop where the goods or services advertised are sold or provided, after viewing the advertisement, based on the terminal movement history information of the mobile terminal 4 of the user who viewed the advertisement and is specified by the advertisement viewing user specifying unit 626, and the vehicle movement history information of the vehicle 3 having a possibility of being boarded by the user.

Thus, the advertising management server 6 can specify the users who viewed an advertisement, such as a billboard or a digital signage, that is installed around a certain road, by determining whether the user of each mobile terminal 4 got on board the vehicle 3, and the vehicle 3 passed the road adjacent to the advertisement, from the terminal movement history information of each mobile terminal 4, and the vehicle movement history information of the vehicle 3 having a possibility of being boarded by the user of each mobile terminal 4. Then, the advertising effectiveness measuring unit 627 can determine whether the user got on board the vehicle 3 after viewing the advertisement, and visited a physical shop where the goods, etc. as a subject of the advertisement, are sold, based on the terminal movement history information and the vehicle movement history information. Accordingly, the advertising management server 6 can measure the leading effect (leading conversion) of the advertisement, such as a billboard or the digital signage terminal 7, around the road, i.e., the effect to lead the user to visit the physical shop, based on the actual visit of the user to the physical shop.

The advertising effectiveness measuring unit 627 determines whether the user actually purchased a commercial product or service via the Internet after viewing advertisement, based on the Internet browsing history in the mobile terminal 4 of the user.

Thus, the advertisement management system can measure the leading effect (leading conversion) of an advertisement, such as a billboard or a digital signage, around a road, i.e., the effect to lead the user to purchase a commercial product advertised, in a physical shop or via the Internet, based on the purchase history via the Internet.

While the embodiment of the invention has been described in detail, the invention is not limited to the particular embodiment, but may be subjected to various modifications or changes, within the scope of the invention as defined in the appended claims.

For example, in the above embodiment, the functions of the movement information management server 5 and the advertising management server 6 may be implemented by a single server (one example of the information processing apparatus).

Also, in the above embodiment, each function of the movement information management server 5 and the advertising management server 6 may be shared by another server that can communicate with both the movement information management server 5 and the advertising management server 6.

In the illustrated embodiment, the advertising management system 2 may not be necessarily configured on the assumption that it uses the movement information management server 5, more specifically, the vehicle-for-use specifying unit 525 and the vehicle-for-use DB 5295. More specifically, the advertising management server 6 may perform processing as described above, by using a database (not shown) in which the correspondence relationship between the vehicles 3 and the mobile terminals 4 is registered in advance, by the users of the vehicles 3, for example. Also, the advertisement viewing user specifying unit 626 of the advertising management server 6 may determine whether a certain vehicle boarded by a certain user of the mobile terminal 4 passed a road adjacent to the digital signage terminal 7, based on the terminal movement history information of the mobile terminal 4, with no regard to the vehicle movement history information of the vehicles 3. In this case, the advertisement viewing user specifying unit 626 can determine whether the user of the mobile terminal 4 is traveling by vehicle as a moving means, by using a function similar to that of the moving means determining unit 424 of the mobile terminal 4. Also, the advertising effectiveness measuring unit 627 of the advertising management server 6 may determine whether each user of the mobile terminal 4 who viewed a certain advertisement visited a physical shop as a guidance destination to which the user is led by the advertisement, based on the terminal movement history information of the mobile terminal 4, with no regard to the vehicle movement history information of the vehicle 3.

## Claims

1. An information processing apparatus, comprising:
a vehicle movement history information storage unit (522) that stores vehicle movement history information concerning vehicle movement histories of a plurality of vehicles (3), each of the vehicle movement histories including position information and clock time information on each of the vehicles;
a terminal movement history information storage unit (523) that stores terminal movement history information concerning terminal movement histories of a plurality of mobile terminals (4), each of the terminal movement histories including position information and clock time information on each of the mobile terminals; and
a vehicle specifying unit (525) that specifies one or more vehicles having a possibility of being boarded by a user of each of the mobile terminals, from among the vehicles, based on the vehicle movement history information stored in the vehicle movement history information storage unit (522), and the terminal movement history information stored in the terminal movement history information storage unit (523).

2. The information processing apparatus according to claim 1, further comprising a vehicle picking unit (524) that picks out one or more vehicles boarded by the user of each of the mobile terminals, from among the vehicles, based on the vehicle movement history information stored in the vehicle movement history information storage unit (522), and the terminal movement history information stored in the terminal movement history information storage unit (523),
wherein the vehicle specifying unit (525) specifies the one or more vehicles having the possibility of being boarded by the user of each of the mobile terminals, from the one or more vehicles boarded by the user of each of the mobile terminals and picked out by the vehicle picking unit (524).

3. The information processing apparatus according to claim 2, wherein the vehicle picking unit (524) picks out a given vehicle as the one or more vehicles boarded by the user of one of the mobile terminals, when the terminal movement history information of the one mobile terminal indicates that, on a movement route from a departure point to a destination included in the vehicle movement history information of the given vehicle, the one mobile terminal stayed at around the departure point and the destination, in time slots in which the given vehicle was parked at the departure point and the destination, and indicates that the one mobile terminal was present at substantially the same position on the movement route at substantially the same time as the given vehicle.

4. The information processing apparatus according to claim 2 or 3, wherein the vehicle specifying unit (525) specifies one or more vehicles having a boarding frequency that is equal to or higher than a predetermined value, out of the one or more vehicles boarded by the user of each of the mobile terminals and picked out by the vehicle picking unit (524), as the one or more vehicles having the possibility of being boarded by the user of each of the mobile terminals.

5. The information processing apparatus according to any one of claims 1 to 4, further comprising:
a vehicle storage unit (529) that stores the one or more vehicles having the possibility of being boarded by the user of each of the mobile terminals and specified by the vehicle specifying unit (525), in association with the mobile terminal, or the user of the mobile terminal; and
an on-board specifying unit (527) that determines whether the user of the mobile terminal is on board one of the one or more vehicles stored in the vehicle storage unit (529) in association with the mobile terminal or the user, based on current position information of the mobile terminal, and current position information of the one vehicle.

6. The information processing apparatus according to any one of claims 1 to 5, further comprising a user connection determining unit (526) that determines a degree of connection between the users of the mobile terminals, based on the one or more vehicles having the possibility of being boarded by the user of each of the mobile terminals and specified by the vehicle specifying unit (525).

7. The information processing apparatus according to claim 6, wherein, when the vehicle specifying unit (525) specifies the same vehicle as one of the vehicles used by two or more users of the mobile terminals, the user connection determining unit (526) determines the degree of connection between the two or more users of the mobile terminals, according to a boarding frequency of each of the two or more users on the same vehicle;
wherein the information processing apparatus may further comprise an advertisement viewing user specifying unit (626) that specifies users of the mobile terminals who viewed an advertisement, from among the users of the mobile terminals; and a track record specifying unit (627) that determines whether each of the users who viewed the advertisement and are specified by the advertisement viewing user specifying unit (626) actually visited a physical shop at which goods or services as a subject of the advertisement are sold or provided, after viewing the advertisement, based on the terminal movement history information of the mobile terminal of the each user, and the vehicle movement history information of the one or more vehicles having the possibility of being boarded by the user and specified by the vehicle specifying unit (525);
wherein, when the track record specifying unit (627) may determine, based on the terminal movement history information of the mobile terminal of a first user who viewed the advertisement and is specified by the advertisement viewing user specifying unit (626), and the vehicle movement history information of the one or more vehicles having the possibility of being boarded by the first user and specified by the vehicle specifying unit (525), that the first user of the mobile terminal got on board one of the one or more vehicles and visited the physical shop, the track record specifying unit (627) may determine, based on the terminal movement history information of a second user having a possibility of boarding the one vehicle specified by the vehicle specifying unit (525), whether the second user was on board the one vehicle when the first user visited the physical shop;
wherein the track record specifying unit (627) may determine that one of the users of the mobile terminals who viewed the advertisement and are specified by the advertisement viewing user specifying unit (626) visited the physical shop, when determining that the vehicle boarded by the one user was parked within a range of a parking space of the physical shop, or determine that the vehicle boarded by the one user steered away from a road at around a gateway of the parking space of the physical shop, or determine that the vehicle boarded by the one user returned onto a road from an outside of the road, at around the gateway of the parking space of the physical shop;
wherein one of the information processing apparatus further comprises an advertisement delivery unit (625) that delivers the advertisement to at least a part of the mobile terminals (4), wherein the advertisement viewing user specifying unit (626) specifies the users who viewed the advertisement, based on a delivery history of the advertisement delivered to the mobile terminals by the advertisement delivery unit (625); or
wherein the advertisement viewing user specifying unit (626) specifies the users of the mobile terminals who viewed the advertisement delivered via the Internet, based on an Internet browsing history of each of the mobile terminals, or specifies the users of the mobile terminals who viewed the advertisement installed around a road, based on the terminal movement history information of each of the mobile terminals, and the vehicle movement history information of the one or more vehicles having the possibility of being boarded by the user of each of the mobile terminals and specified by the vehicle specifying unit (525).

8. The information processing apparatus according to any one of claims 1 to 7, further comprising:
an advertisement viewing user specifying unit (626) that specifies users of the mobile terminals who viewed an advertisement installed around a road, from among the users of the mobile terminals, based on the terminal movement history information of the user of each of the mobile terminals, and the vehicle movement history information of the one or more vehicles having the possibility of being boarded by the user of each of the mobile terminals and specified by the vehicle specifying unit (525); and
a track record specifying unit (627) that determines whether each of the users who viewed the advertisement and are specified by the advertisement viewing user specifying unit (626) actually visited a physical shop at which goods or services as a subject of the advertisement are sold or provided, after viewing the advertisement, based on the terminal movement history information of the mobile terminal of the each user who viewed the advertisement and is specified by the advertisement viewing user specifying unit (626), and the vehicle movement history information of the one or more vehicles having the possibility of being boarded by the user and specified by the vehicle specifying unit (525), or determines whether each of the users who viewed the advertisement and are specified by the advertisement viewing user specifying unit (626) actually purchased any of the goods or services via the Internet, after viewing the advertisement, based on an Internet browsing history of the mobile terminal of the user.

9. An information processing system, comprising:
a plurality of vehicles (3);
a plurality of mobile terminals (4);
a server (5) operable to communicate with each of the vehicles and each of the mobile terminals;
a vehicle movement history information storage unit (522) that stores vehicle movement history information concerning vehicle movement histories of the vehicles (3), each of the vehicle movement histories including position information and clock time information on each of the vehicles;
a terminal movement history information storage unit (523) that stores terminal movement history information concerning terminal movement histories of the mobile terminals (4), each of the terminal movement histories including position information and clock time information on each of the mobile terminals; and
a vehicle specifying unit (525) that specifies one or more vehicles having a possibility of being boarded by a user of each of the mobile terminals, from among the vehicles, based on the vehicle movement history information stored in the vehicle movement history information storage unit (522), and the terminal movement history information stored in the terminal movement history information storage unit (523).

10. The information processing system according to claim 9, further comprising:
a moving means determining unit (424) that is provided in each of the mobile terminals, and determines whether the user of the mobile terminal is traveling by vehicle as a moving means; and
a terminal transmitting unit (425) provided in each of the mobile terminals, the terminal transmitting unit being configured to transmit the terminal movement history information of the mobile terminal at a first time when the moving means determining unit (424) determines that the user of the mobile terminal is traveling by vehicle as the moving means, to the server (5), in a manner that enables the server to distinguish the terminal movement history information at the first time from the terminal movement history information of the mobile terminal at a second time when the moving means determining unit (424) determines that the user of the mobile terminal is not traveling by vehicle as the moving means,
wherein the vehicle movement history information storage unit (522), the terminal movement history information storage unit (523), and the vehicle specifying unit (525) are provided in the server (5).

11. An information processing method performed by an information processing apparatus, comprising:
storing vehicle movement history information concerning vehicle movement histories of a plurality of vehicles (3), each of the vehicle movement histories including position information and clock time information on each of the vehicles;
storing terminal movement history information concerning terminal movement histories of a plurality of mobile terminals (4), each of the terminal movement histories including position information and clock time information on each of the mobile terminals; and
specifying one or more vehicles having a possibility of being boarded by a user of each of the mobile terminals, from among the vehicles, based on the vehicle movement history information and the terminal movement history information.

12. A non-transitory computer readable recording medium recording a program that causes a computer to execute the steps of:
storing vehicle movement history information concerning vehicle movement histories of a plurality of vehicles (3), each of the vehicle movement histories including position information and clock time information on each of the vehicles;
storing terminal movement history information concerning terminal movement histories of a plurality of mobile terminals (4), each of the terminal movement histories including position information and clock time information on each of the mobile terminals; and
specifying one or more vehicles having a possibility of being boarded by a user of each of the mobile terminals, from among the vehicles, based on the vehicle movement history information and the terminal movement history information.

13. An information processing apparatus, comprising:
a vehicle movement history information obtaining unit (522) that obtains vehicle movement history information concerning vehicle movement histories of a plurality of vehicles (3);
a terminal movement history information obtaining unit (523) that obtains terminal movement history information concerning terminal movement histories of a plurality of mobile terminals (4);
a boarding assuming unit (524) that assumes boarding of a user of one of the mobile terminals on one of the vehicles, based on the vehicle movement history information and the terminal movement history information; and
a user group assuming unit (526) that assumes two or more users of the mobile terminals assumed by the boarding assuming unit to be on board the same one of the vehicles, as a user group having a strong connection.

14. The information processing apparatus according to claim 13, wherein the boarding assuming unit (524) uses a movement track from start to stop of the vehicle, as the vehicle movement history information.

15. The information processing apparatus according to claim 13 or 14, wherein the boarding assuming unit (524) assumes boarding of the user of the one mobile terminal on the one vehicle, when determining that position information of the vehicle at a given point in time, which is included in the vehicle movement history information, substantially coincides with position information of the mobile terminal at substantially the same point in time, which is included in the terminal movement history information.
